Europäisches Patentamt

European Patent Office

Office européen des brevets

(19)

(11) Publication number: 0 269 372

A2

(12) **EUROPEAN PATENT APPLICATION**

(21) Application number: 87310242.0

(22) Date of filing: 19.11.87

(51) Int. Cl.4: **B25J 9/18**

(30) Priority: 20.11.86 US 932990
20.11.86 US 932976
20.11.86 US 932977
20.11.86 US 932853

(43) Date of publication of application:
01.06.88 Bulletin 88/22

(84) Designated Contracting States:
DE FR GB IT SE

(71) Applicant: **UNIMATION INC.**
**Shelter Rock Lane**
**Danbury Connecticut 06810(US)**

(72) Inventor: **Lancraft, Roy Edwin**
**80 Beecher Drive**
**Southbury, CT 06488(US)**
Inventor: **Daggett, Kenneth Edward**
**3724 Glen Eagle Drive**
**Murrysville, PA 15668(US)**
Inventor: **Onaga, Eimei Mind**
**10 Ox Drive**
**Brookfield Center, CT 06805(US)**
Inventor: **Casler, Richard James, Jr.**
**32 Maltbie Road**
**Brookfield, CT 06804(US)**
Inventor: **Booth, Barrett Lawrence**
**7 High Acres Road**
**Brookfield, CT 06804(US)**
Inventor: **Bergman, Norman Joseph**
**17 Ole Musket Lane**
**Dunbury, CT 06810(US)**
Inventor: **Muncy, Marcus David**
**2996 Fairfield Avenue**
**Bridgeport, CT 06804(US)**

(74) Representative: **van Berlyn, Ronald Gilbert**
**23, Centre Heights**
**London, NW3 6JG(GB)**

(54) Robot with micro processor-based digital robot control.

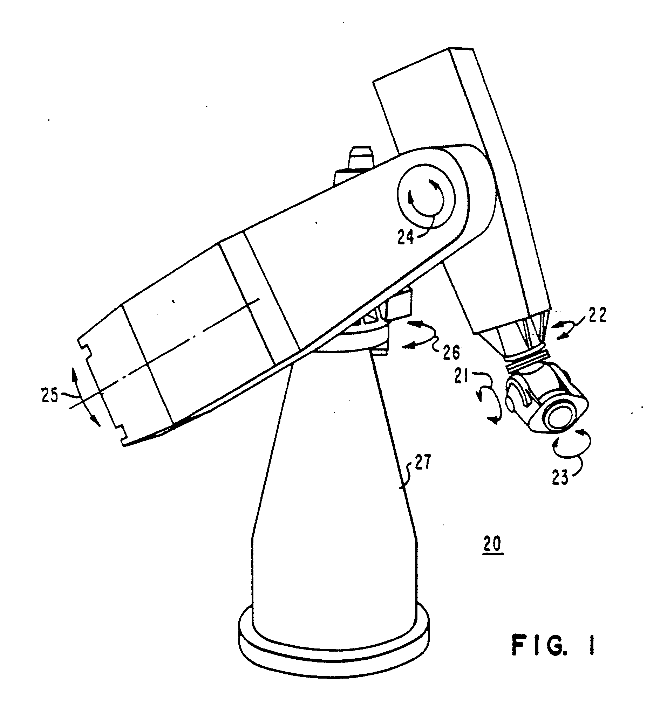

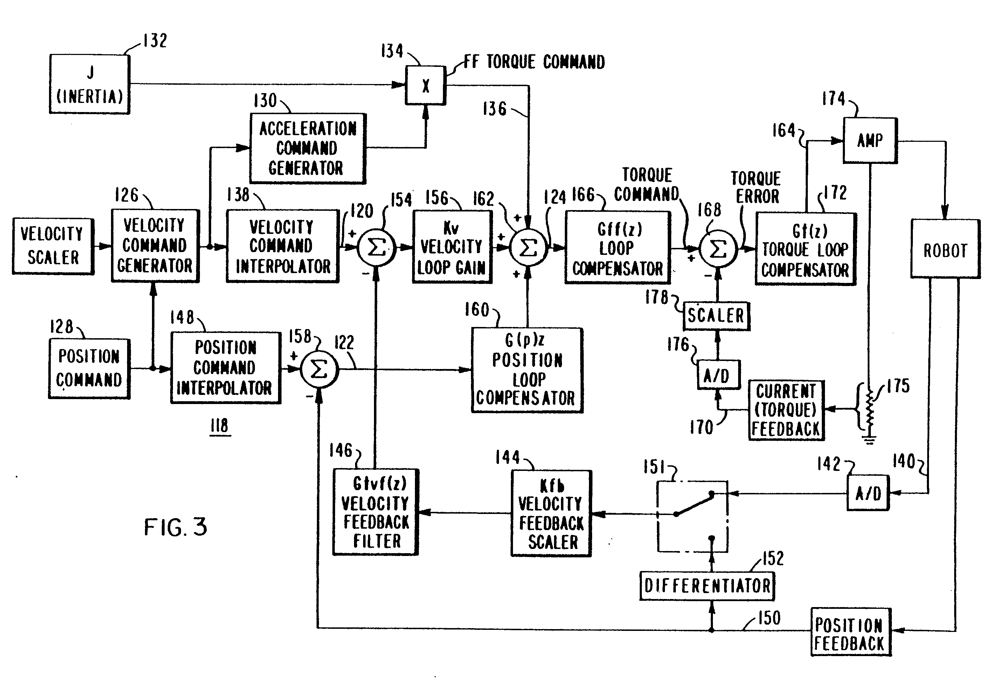

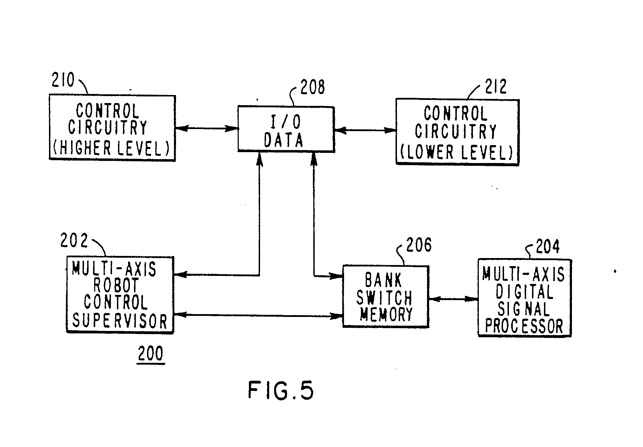

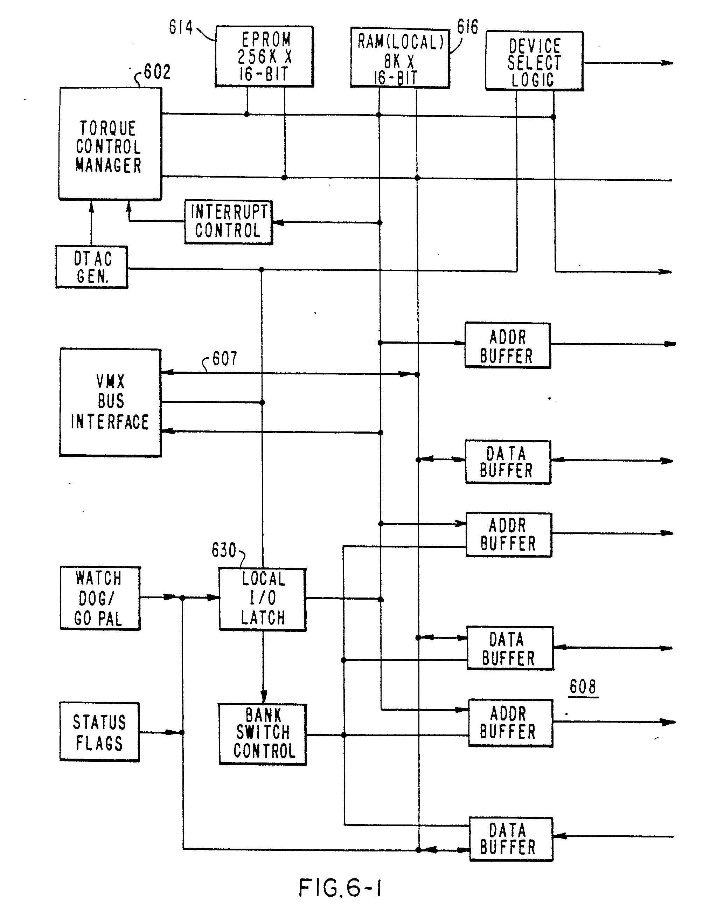

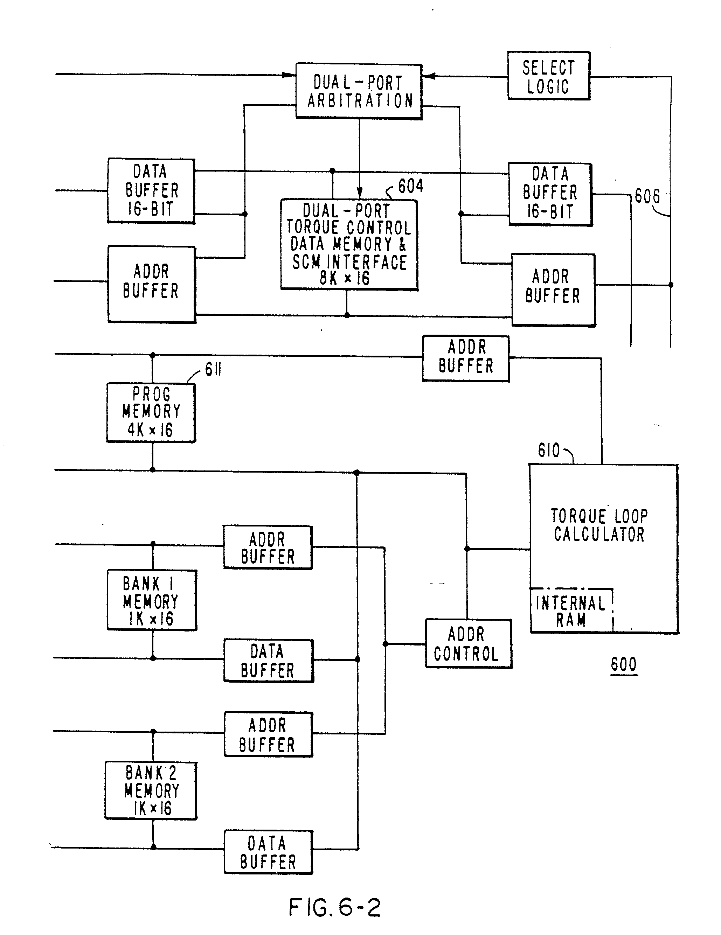

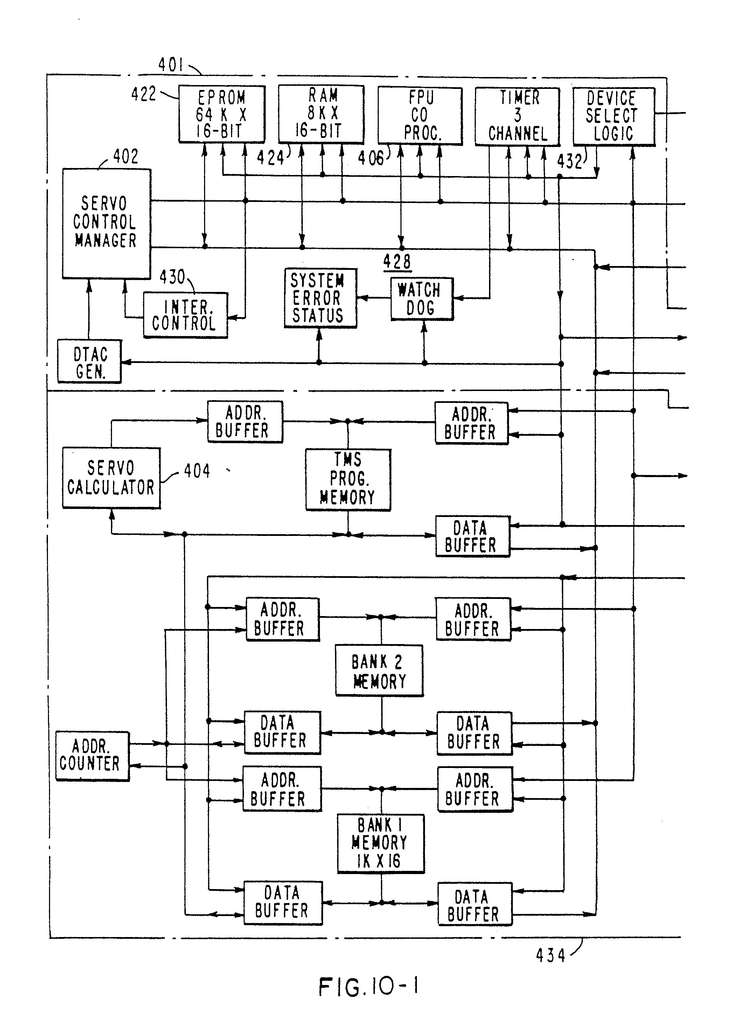

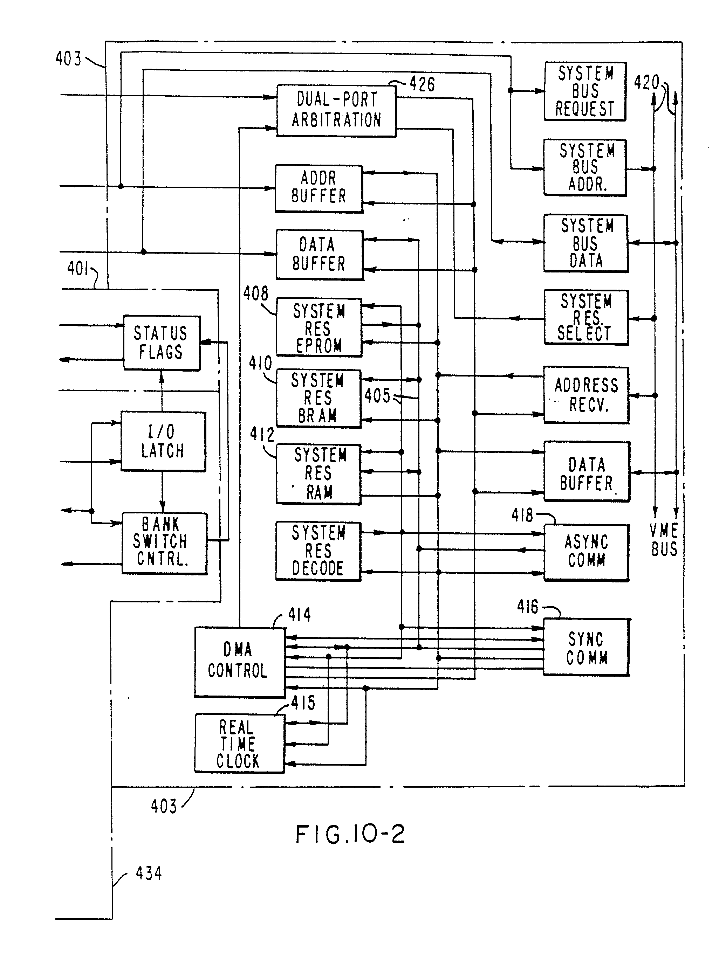

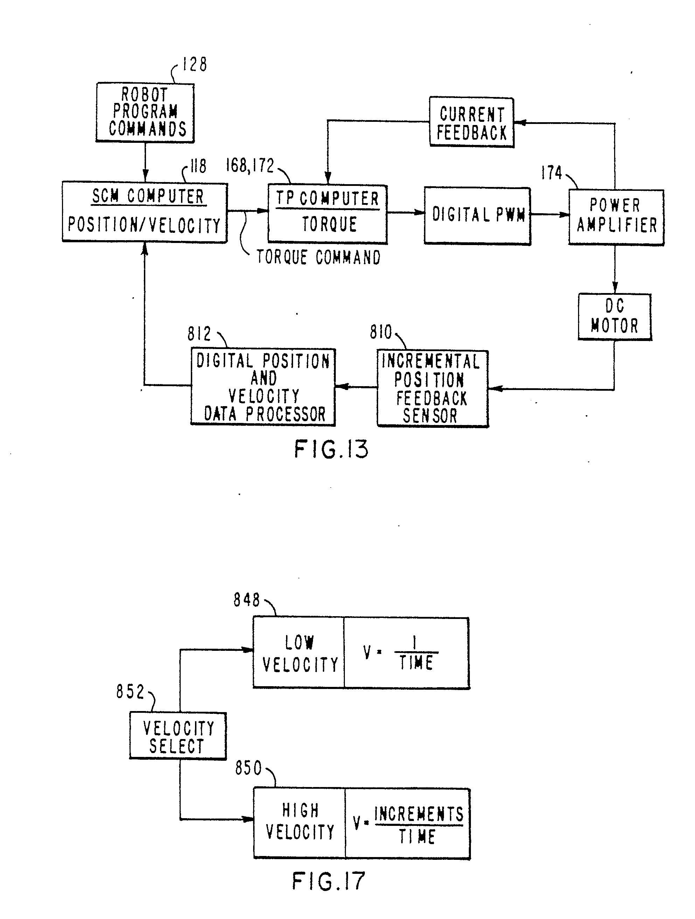

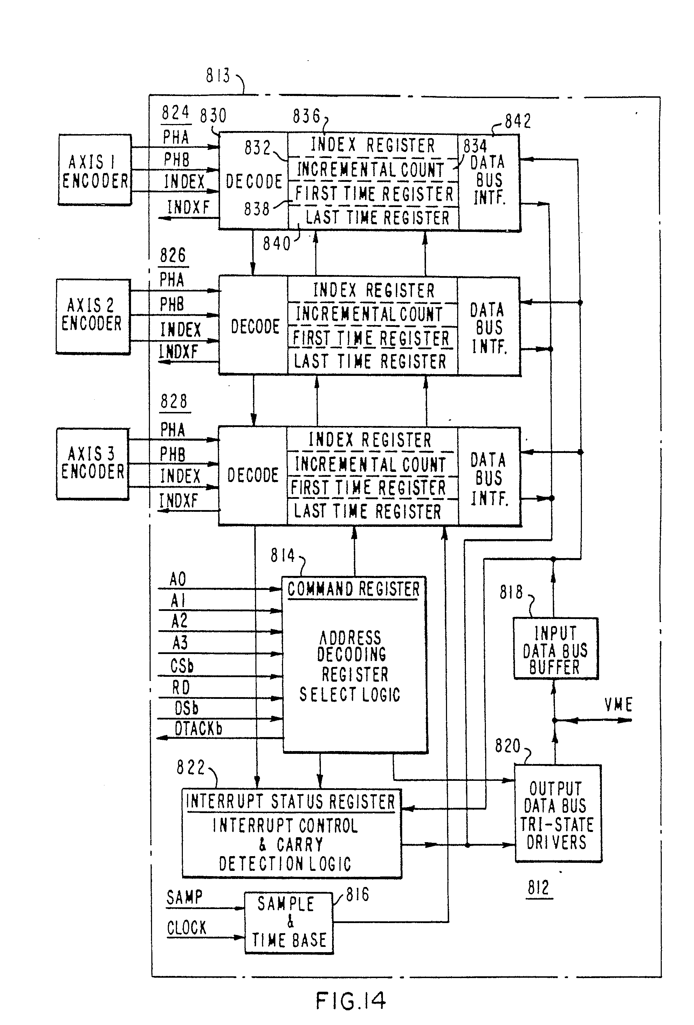

(57) A digital robot control [Figures 3 and 5] is provided with cascaded position/velocity [Figure 10] and torque [Figure 6] control loops with microprocessor servo controllers in each. Each servo controller includes two microprocessors (202, 204) that operate as a servo engine in providing motion control for six robot axes [Figure 1, 21-26]. One microprocessor (202) is structured to perform data processing and coordination tasks. The other one (204) performs calculation tasks and operates as a slave processor to the first. Also included as part of the robot control is a digital position and velocity feedback system [Figure 13, 810, 812] for multiaxis robot control which employs a circuit [Figure 14, 813] to process robot motor encoder incremental position signals for position change and velocity computations. At low speeds, velocity is computed [Figure 17, 848] from the reciprocal of elapsed time. At higher speeds, velocity is computed (850) from the rate at which incremental position signals are generated.

# ROBOT WITH IMPROVED MICROPROCESSOR-BASED DIGITAL ROBOT CONTROL

## INTRODUCTION

The present invention relates to robot controls and more particularly to electronic robot controls in which microprocessors are employed in the implementation of servo control loops and their associated feedback systems.

A robot control typically has capability for operating six robot axes, and each axis is typically provided with position and velocity control looping. In the case of a completely digital robot control like that set forth in this patent application, torque current control looping can also be included in the robot control.

In the implementation of a robot control with microprocessor technology, significant processing capability is thus required for servo loop control implementation in both hybrid digital/analog systems and completely digital systems. The required processing capability is based on general control requirements, data handling requirements and mathematical processing requirements.

The total capability requirement generally is not available in commercially available microprocessors. As a result, it has been the practice to employ multiple microprocessors in robot controls, with the microprocessors being assigned position and velocity and related control tasks on a per axis basis. One disadvantage associated with this design approach is that interactions among axes are not readily taken into account. Further, even with multiple microprocessors, there is limited capacity to accommodate more complex control algorithms which can be expected to be developed with continuing development of robot control technology.

Since no single microprocessor provides the features needed to satisfy the processing capability requirements for multi-axis robot control, it has been desirable that a new multi-microprocessor arrangement be devised to provide improved microprocessor based robot control and to enable completely digital robot control to be achieved with high performance results, cost effectiveness and manufacturing economy. One aspect of the present invention is directed generally to a multiprocessor servo control that can be embodied in different multiaxis robot control loops.

Moreover, in the operation of robot control systems, individual axis position and velocity parameters are placed under closed loop control. Microprocessors may be employed to make control loop calculations and perform other functions for the robot control. In any case, motor velocity and axis (motor) position signals are required for control loop operation.

Position feedback may be absolute or it may be incremental, and it is the latter type to which the present invention relates. Velocity feedback may be generated by tachometers and/or it may be derived from position feedback as it is in the present case.

The most common type of incremental position feedback encoder is based on optical technology. The optical encoder typically employs optical transmitters and receivers with a rotating disc having transparent slits. Two phase signals and an index signal are generated by the encoder.

The phase signals are offset from each other by 90 degrees in a quadrature encoding scheme such that they can exist in four different states. State transitions enable incremental position change and direction of position change to be detected.

The index signal may occur once every optical disk revolution thereby providing a mechanism for verifying accumulated incremental position change from the two phase signals.

In implementing digital robot control, the amount of digital circuitry required with conventional prior art approaches for conversion of the encoder phase signals to incremental counts for access by a microcomputer is extensive. Moreover, although derivation of velocity from position change is typically acceptable at high velocities, inadequate velocity resolution is achieved at low velocities with conventional conversion circuitry. Better low velocity resolution can be achieved with increased resolution of the encoder, but the extent of improvement through this alternative is limited and in any case results in substantially increased product cost.

## THE STATEMENT OF THE INVENTION

The invention resides in a robot having a plurality of arm joints each driven by an electric motor, and a digital robot control therefor which comprises a power amplifier operable to supply drive current to each motor, respective feedback control loop means for respectively controlling the power amplifiers for the joint

2

motors, each of the feedback control loop means including at least digital position and velocity control loops operable to control the associated power amplifier, and at least first servo control means for performing control support tasks and calculation tasks for at least one of the control loops for all of the joint motors. The invention being characterized by the first servo control means including a first microprocessor for performing calculation tasks including computing output control commands from stored algorithms for the one control loop for each joint motor wherein the first microprocessor has a relatively high computing performance capability and a relatively low data processing interface capability, and further characterized by the first servo control means further including a second microprocessor for supervising the operation of the first servo control means and performing servo control support tasks in the one control loop for each joint motor including the routing of control command, status and feedback data to and from the first microprocessor. Further included is means for interfacing the first and second microprocessors relative to each other and relative to higher and lower level control circuitry so as to enable the first servo control means to operate the one control loop for each joint motor and control the controlled variable for the one control loop.

## THE DESCRIPTION OF THE DRAWINGS

The invention will become more readily apparent from the following description of the preferred embodiment thereof shown, by way of example only, in the accompanying drawings, wherein:

Figure 1 shows a perspective view of a robot which is operated with more advanced and more accurate performance when controlled by a system making use of the invention;

Figure 2 shows a generalized block diagram of a control loop arrangement employing position, velocity and torque control loops in which the invention may be embodied;

Figure 3 shows a more detailed block diagram of a control loop arrangement employing position, velocity and torque control loops in which the invention preferably is embodied;

Figure 4 shows an overview of an arrangement of electronic boards on which circuitry is arranged to implement the robot control system including the servo control of the present invention;

Figure 5 shows a block diagram of a servo control system arranged to operate in a multi-axis digital robot control in accordance with the invention;

Figures 6-1 and 6-2 show a schematic diagram of an electronic torque processor (TP) board included in Figure 4 and embodying in a first invention embodiment the servo control system of Figure 5;

Figures 7A1-7A3 show a still more detailed diagram of the control loop arrangement of Figure 2;

Figures 7B1-7B2 show a diagram of the torque control loop included in the diagram of Figure 7A;

Figures 8A1-8F show schematic flow charts represent programming run in microporcessors employed in the TP board circuitry;

Figure 9 shows a timing chart for the torque processor board operation;

Figures 10-1 and 10-2 show a schematic diagram of an electronic servo control (SCM) board included in Figure 4 and embodying in a second invention embodiment the servo control system of Figure 5; and

Figures 11A-11H show schematic flow charts representing programming run in microprocessors employed in the SCM board circuitry;

Figures 12-1 and 12-2 show diagrams illustrating data flow and timing for the SC, AIF, SCM and TP boards;

Figure 13 shows a block diagram of a simplified control loop configuration employing a position and velocity feedback system arranged in accordance with the principles of another aspect of the invention;

Figure 14 shows a general block diagram of feedback system circuitry employed in Figure 5 to process encoder signals for three axes of a robot and convert them to an incremental position count and provide a basis for deriving more accurate axis velocity;

Figure 15 shows a block diagram schematic more detailed than the diagram of Figure 14 and it is directed to one of the three axes;

Figure 16A shows waveforms depicting the relationship among the encoder signals, the position increment signals and the velocity related time signals;

Figure 16B shows waveforms which illustrate the manner in which velocity is determined from position changes; and

Figure 17 shows a functional block diagram which illustrates the operations that may be used in controlling the velocity computation method for programming purposes.

3

## DESCRIPTION OF THE PREFERRED EMBODIMENT

### ROBOTS - GENERALLY

Robot capabilities generally range from simple repetitive point-to-point motions to complex motions that are computer controlled and sequenced as part of an integrated manufacturing system. In factory applications, robots can perform a wide variety of tasks in various manufacturing applications including: die casting, spot welding, arc welding, investment casting, forging, press working, spray painting, plastic molding, machine tool loading, heat treatment, metal deburring, palletizing, brick manufacturing, glass manufacturing, etc. For more complete consideration of robots and their uses, reference is made to a book entitled "Robotics In Practice" published in 1980 by Joseph F. Engelberger.

To perform work within its sphere of influence, a robot typically is provided with an arm, a wrist subassembly and an end effector. The coordinate system employed for the robot arm typically is Cartesian, cylindrical, polar or revolute. Generally, three motion axes are employed to deliver the wrist subassembly anywhere within the sphere of influence and three additional motion axes are employed for universal orientation of the end effector. A drive system is used for each motion axis, and it may be electrical, hydraulic or pneumatic.

### PUMA ROBOT

More particularly, there is shown in Figure 1 a six-axis industrial electric robot 20 which is illustrative of a wide variety of robots that can be operated in accordance with the principles of the invention. The robot 20 is a relatively powerful electric robot sold by Unimation Company, a wholly-owned company of the present assignee, under the trade name UNIMATE PUMA SERIES 700. The Model 761 PUMA has a 22 pound payload capacity and a reach of 59.1 inches. The Model 762 PUMA has a 44 pound payload capacity and a reach of 49.2 inches.

PUMA 700 Series robots are designed with flexibility and durability to ensure long life and optimum performance in even the harshest, most demanding manufacturing environments. Specific customer needs for either higher payload or extended reach determine which model is suitable for a particular task.

With its longer reach, the PUMA 761 is ideally suited for precise, repetitive tasks such as arc welding and sealant dispensing. The PUMA 762 performs high-precision material handling, machine loading, inspection, testing, joining and assembly in medium and heavier weight applications. The PUMA robots occupy minimal floor space, yet a large work envelope allows the robots to service multiple machines and work surfaces.

Each axis motion is generated by a brush type DC electric motor, with axis position feedback generated by incremental encoders. As shown, the wrist is provided with three articulations, i.e., an up/down rotation indicated by arrow 21 and a left/right rotation indicated by arrow 22 and a third arm motion indicated by arrow 23. Elbow and shoulder rotations in the up/down direction are respectively indicated by arrows 24 and 25. Finally, a left/right arm rotation on a base 27 is indicated by arrow 26.

### ROBOT CONTROL

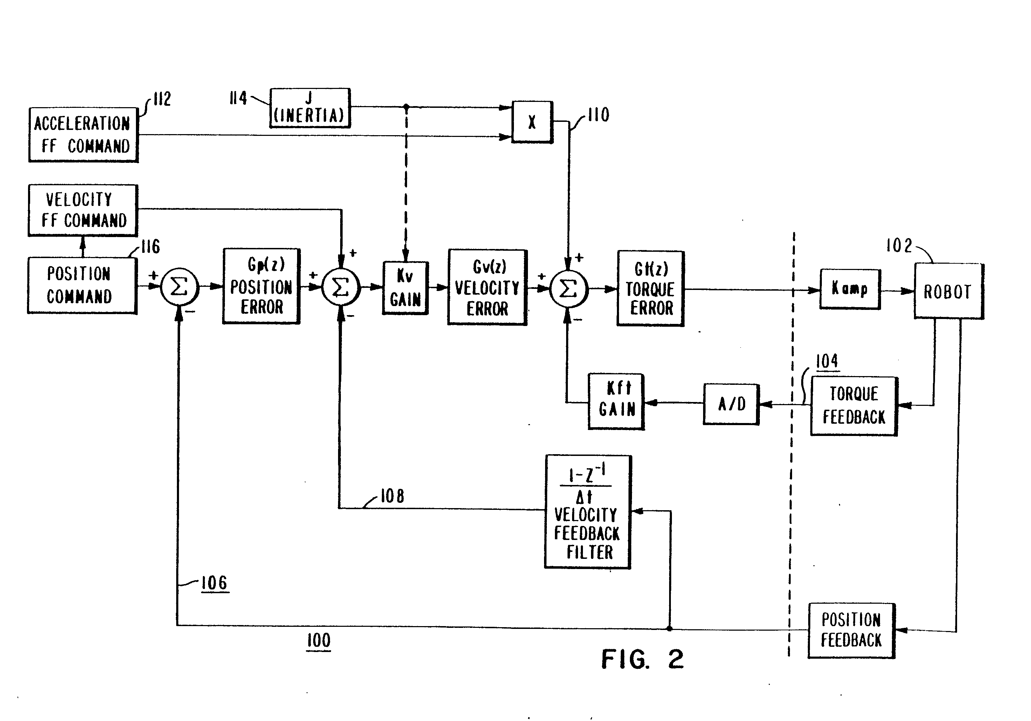

The present invention is directed to a robot control 30 (Figure 2) which can operate the robot 20 of Figure 1 and other robots including the larger Unimation 860 robot which employs brushless DC axis motors and absolute position feedback. Generally, however, the robot control 30 is universally and flexibly applicable to differing kinds and sizes of robots in stand alone or robotic network operation.

As a result of its universality, the control 30 can be arranged to operate a complete family of robots. Thus, all hydraulically and electrically driven robot arms manufactured by Unimation, a company of Westinghouse, assignee of the present invention, can be operated by the control 30. The key to the family usage, or more generally the universality of the control 30 lies in modularization and in minimizing the use of arm dependent hardware and avoiding the use of any arm dependent hardware in as much of the modular control structure as possible. The robot control 30 is identified by the acronym UNIVALTM and operates with completely digital servo control to provide better robot performance with lower cost.

## CONTROL LOOPS

In Figure 2, there is shown an embodiment of a generalized control loop configuration 100 employable in the UNIVALᴛᴍ robot control. Thus, each robot arm joint motor 102 is operated by a torque control loop 104. An outer position control loop 106 is tandem connected to a velocity control loop 108 which in turn drives the torque control loop 104. A feedforward acceleration control loop 110 is responsive to acceleration command 112 and arm and load inertia 114 is also directly coupled to the input of the torque control loop 104. The robot arm is operated by the control loop 100 in accordance with a robot program through a stream of program position commands 116 applied to the position control loop.

Figure 3 shows the preferred generalized control loop configuration 118 presently employed in the UNIVALᴛᴍ robot control. It is preferably implemented as a completely digital control. With the provision of hierarchical architecture and multiprocessor architecture and floating point hardware as described herein or in other patent applications referenced above, the trajectory cycle can be characterized with a cycle time in the range of 32 to 8 milliseconds depending on the employed modular configuration.

In the preferred control loop arrangement 118, position and velocity control loops 120 and 122 are parallel fed to the input of a torque control loop 124. Velocity commands are generated by block 126 from position commands received by block 128. In turn, feedforward acceleration commands are generated by block 130 from the velocity commands. Computed inertia (load and arm) 132 is multiplied against the acceleration command as indicated by reference character 134 in the feedforward acceleration control loop 136.

In the velocity loop 120, the velocity command in the present embodiment is generated once every 8 to 32 milliseconds depending on the modular configuration of the robot control. The basic robot control described subsequently herein has a trajectory cycle time of 32 milliseconds while the enhanced contact has a trajectory cycle of 8 milliseconds.

In any case, a velocity command generator 138 interpolates velocity commands at the rate of 1 each millisecond which corresponds with the velocity feedback sampling rate in velocity feedback path 140. As shown, velocity feedback for a Unimation 860 robot is produced by tachometer signals which are converted from analog to digital by converter 142. A scaler 144 and a filter 146 round out the velocity feedback circuitry.

Similarly, in the position control loop 122, an interpolator 148 generates position commands every millisecond in correspondence with the position feedback sampling rate in feedback path 150. In the Unimation 860 robot control, position feedback is absolute and the velocity and position feedback paths 140 and 150 operate as just described (with switch 151 as shown). For Unimation PUMA robots, tachometers are not available and velocity feedback is computed from incremental position feedback as indicated by block 152 (with the switch 151 swinging to its other position). This position and velocity feedback system will be described more fully hereinbelow in connection with Figures 13 through 17.

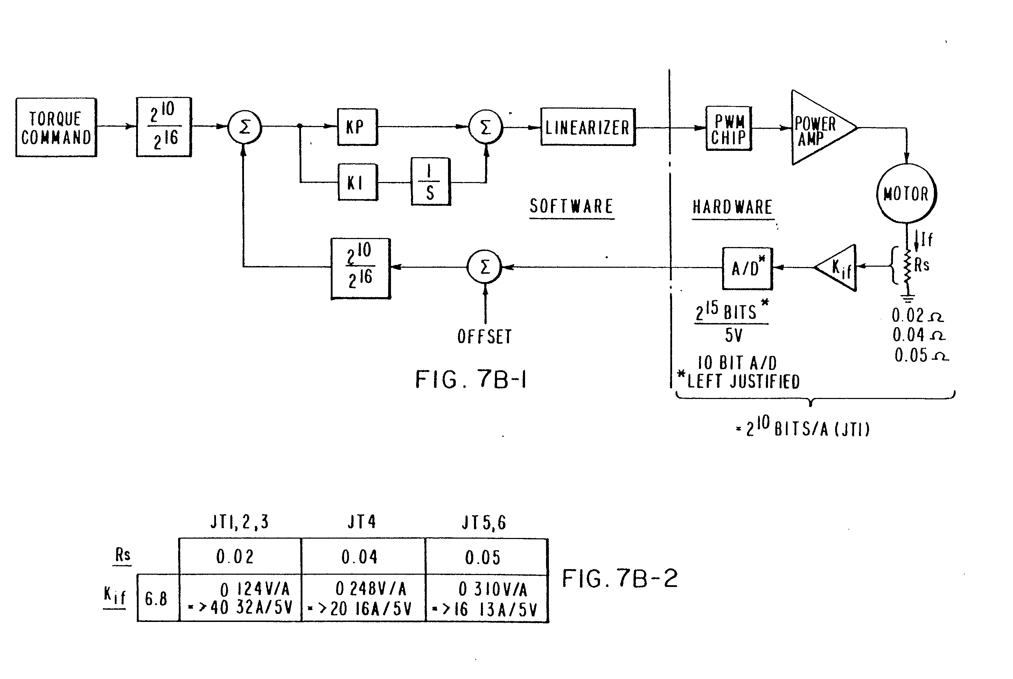

Velocity error is generated by summer 154 with gain applied by loop 156. Similarly, position error is generated by summer 158 with gain applied by box 160. Velocity and position errors and feedforward acceleration command are summed in summer 162. Gain is applied to box 166 to generate a torque command which is applied to the input of torque control loop 164 every millisecond. Torque error is generated in summer 168 by summing the torque command (motor current command) with current feedback from feedback path 170. Box 172 applies a torque loop gain to the torque error and pulse width modulated (PWM) output commands (motor voltage commands) are applied to a power amplifier 174 which supplies the motor drive current for robot joint operation. Current feedback from resistor 175 is generated every 250 microseconds (see Figure 7B1 for a more detailed block diagram schematic) and converted to digital signals by box 176 with scaling applied by box 178.

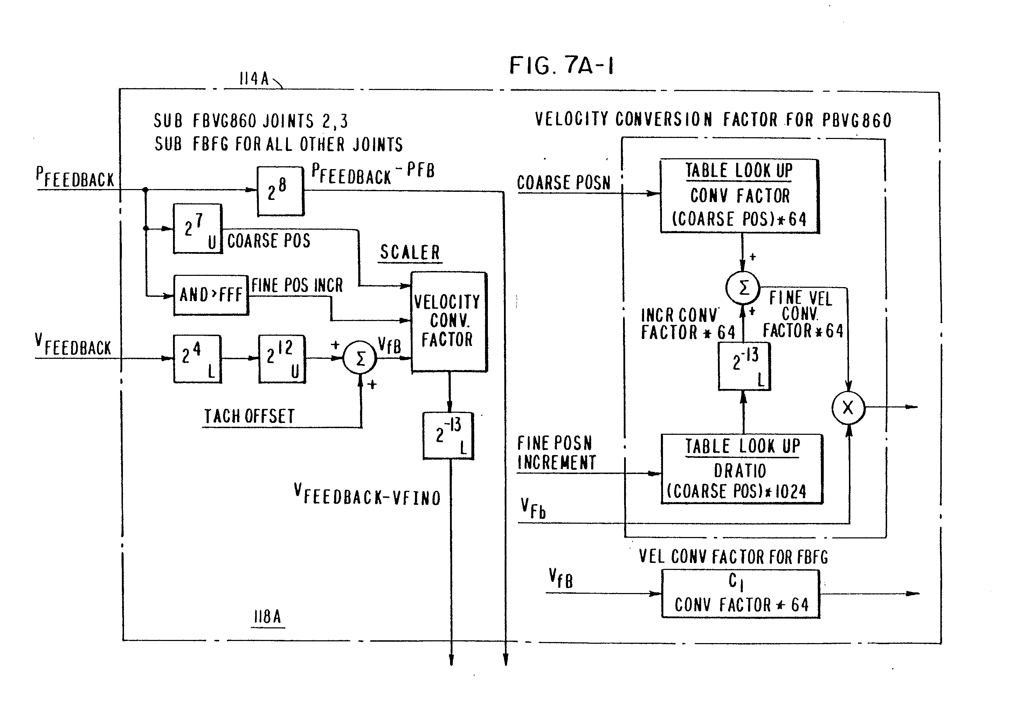

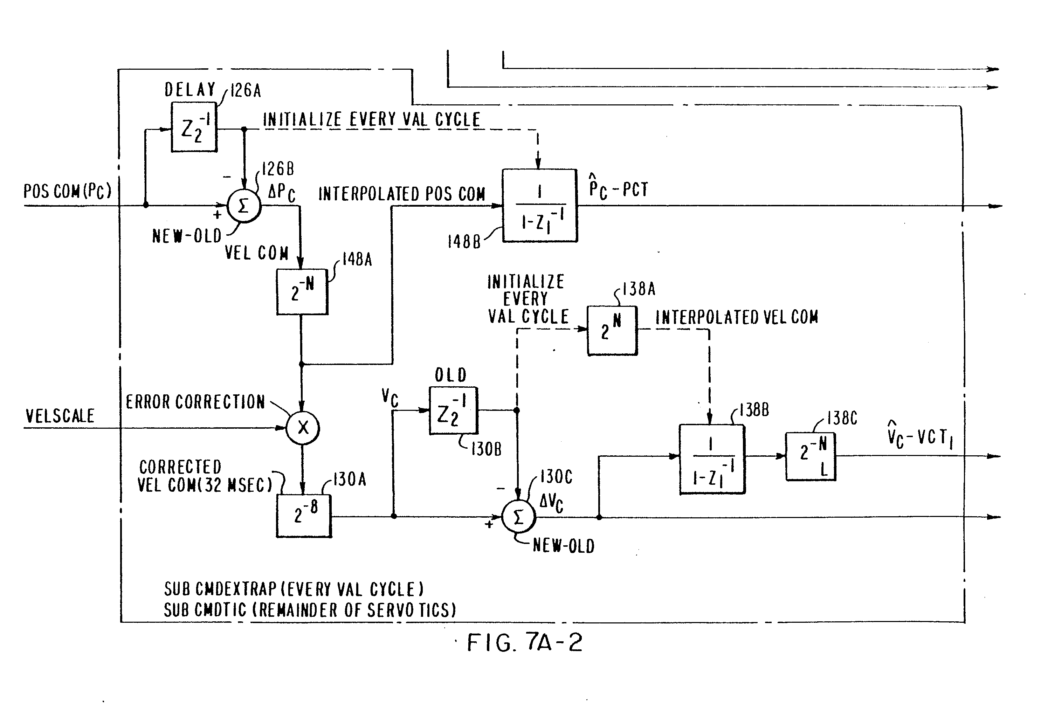

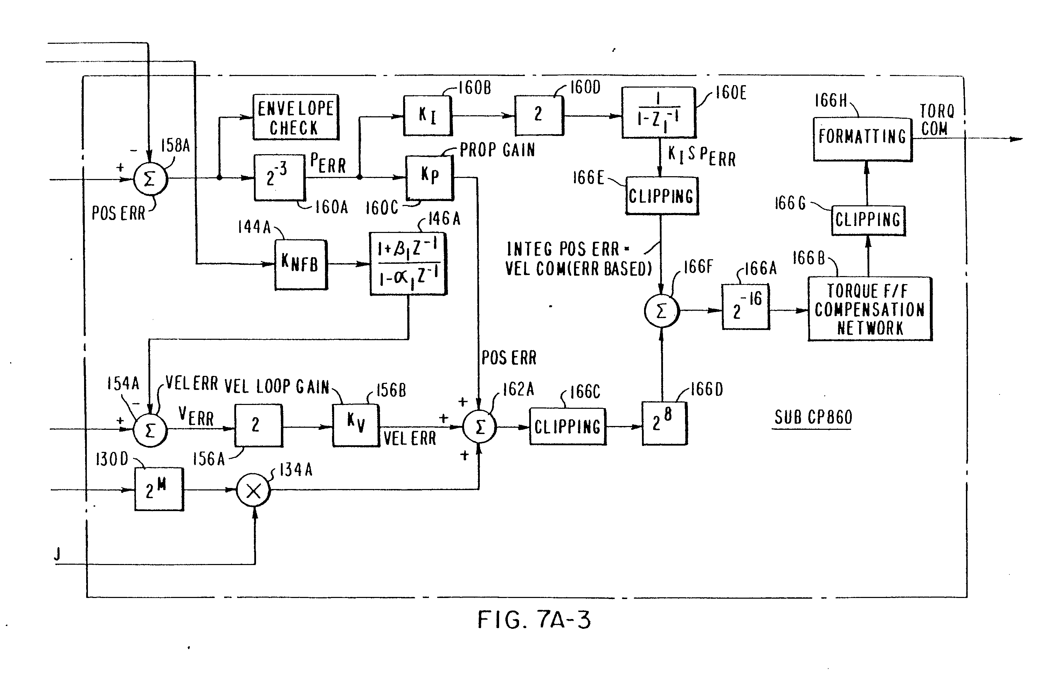

In Figure 7A1-7A3, there is shown a control loop 118A representing another embodiment of the invention arranged to operate a particular Unimation 860 robot for which special velocity feedback processing is needed. The control loop 118A is structured and operates much like the control loop 118 in Figure 3, but it is shown with greater block detail. The following table provides correspondence between the control loop 118A and the control loop 118:

| ELEMENT IN LOOP 118 | CORRESPONDING ELEMENTS IN LOOP 118A |
|---|---|
| Velocity command generator 126 | 126A; 126B |
| Position command interpolator 148 | 148A; 148B |
| Acceleration command generator 130 | 130A; 130B; 130C; 130D |
| Velocity command interpolator 138 | 138A; 138B; 138C |
| Velocity loop gain 156 | 156A; 156B |
| Position loop compensator 160 | 160A through 160E |
| Loop compensator 166 | 166A through 166H |
| Velocity feedback scaler 144 | box 144A |

The velocity feedback scaler is specially structured to provide compensation for nonlinearity in the relationship between actual joint motor velocity and actual joint motor shaft velocity (the sensed velocity parameter) for certain Unimation 860 robots. The system uses a ballscrew with floating pivot point as a drive mechanism. The speed of ballscrew movement is related to motor speed by a nonlinear function. The JT2 and JT3 robots are the units that use this mechanism and a lookup table is provided to linearize the feedback velocity signal supplied to the servo system.

OVERVIEW - ELECTRONIC BOARDS

Implementation of the control looping for the robot control 30 is achieved by the use of digital control circuitry disposed on a plurality of electronic boards. The organization of the circuitry on the boards and the partitioning of programming among various microprocessors enables advanced robot control performance to be achieved with a modular control configuration characterized with economy of manufacture, facilitates variability of configuration which enables universality of use, and flexibility in choice of level of control performance.

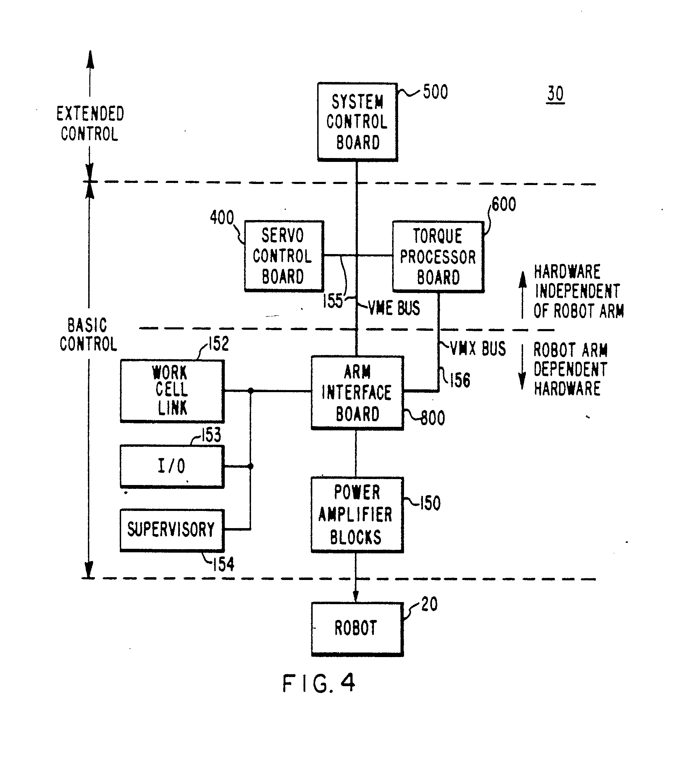

As shown in Figure 4, the control board configuration includes an arm interface board 800 which preferably houses all circuitry dependent on the type of robot arm being controlled. For example, position feedback circuitry will differ according to whether absolute or incremental position feedback is used by the robot arm to be controlled. Thus, two or possibly more varieties of the arm interface board 800 can be employed to provide digital control systems for any of a variety of different sizes or types of robot arms. Any particular robot arm would require use of the arm interface board which is structured to work with that robot arm.

The arm interface (AIF) board 800 also houses generic circuitry such as VME bus control circuitry which is generally related to two or more board and not to any one board in particular.

Control signals (pulse width modulated) are generated from the AIF board 800 to control power amplifier blocks 150 which supply motor currents to the robot joint motors. The AIF board 800 also operates as a channel for external coupling of the robot control 30 to other robot controls in a work cell as indicated by the reference character 152, to programmable controllers and other input/output devices 153 in an area network and to higher level computers 154 for supervisory control.

A torque processor (TP) board 600 and a servo control board 400 are generic circuit boards used with the AIF board 800 and power amplifier blocks 150 in all robot control systems for all robot types. The three circuit boards 400, 600 and 800 provide complete 6 axis control for a robot arm and thus form a basic

6

control configuration for the UNIVAL family of robot controls as well as other robot controls.

The torque processor board 600 provides motor torque control in response to commands from the servo control board 400. In turn, the servo control board 400 provides arm solutions and position and velocity control in accordance with a robot control program.

Extended control capability and/or system functioning is achieved by interconnecting additional electronic boards or devices to the basic control 400, 600, 800. For example, with the addition of a system control board 500 and partitioning of predetermined program functions including the arm solutions from the servo control board 400 to the system control board 500, the UNIVAL control can operate the robot 20 and other robots with significantly faster control action, i.e., with a trajectory cycle shortened from thirty-two milliseconds to eight milliseconds.

Interboard data communications for control and other purposes occur over multiple signal paths in a VME bus 155. Additionally, a VMX bus 156 is provided for connection between the torque processor board 600 and the AIF board 800.

Multiple pin interconnectors (not shown in Figure 4) are provided on the AIF, TP and SCM boards and any other connectable units to facilitate VME and VMX interboard bus connections modular and board assembly for the robot control 30. Other connectors are provided on the AIF board 800 for external input/output connections.

More detail on the board circuit structure is presented herein or elsewhere in this application.

## OVERVIEW OF MULTIPROCESSOR SERVO CONTROL SYSTEM AND SERVO PROCESSING ENGINE

The basic structure of a multiprocessor servo control system 200 in accordance with the invention is illustrated in Figure 5. Multi-axis robot servo control is generated by the joint operation of two microprocessors: specifically, a multi-axis robot control manager 202 generally performs data handling functions while a multi-axis digital signal processor or calculator 204 generally performs computing functions in a slave capacity relative to the manager processor 202. A bank switched or ping-pong memory 206 interfaces the two microprocessors. Input/output data 208, including incoming commands and outgoing commands, are received from higher level control circuitry 210 or sent to lower level control circuitry 212.

In general, microprocessors based on the conventional Von Neumann computer architecture provide the necessary processing capability for performance of the control support and data handling tasks associated with advanced multi-axis robot controls. However, the mathematical processing capability of the Von Neumann type microprocessor is generally inadequate to provide servo control in a single microprocessor for robot control having six axes.

On the other hand, specialized computer architectures have been developed for microprocessors intended for digital signal processing applications. These microprocessors generally have a high speed, fixed point mathematical processing capability which is more than adequate for the numerical calculations required for implementing advanced servo control algorithms in multi-axis robot controls. However, the signal processors are generally lacking in control task support and data handling capabilities.

Accordingly, in implementing the present invention, the two basic microprocessor types are paired together in a multiprocessor architecture. The teamed microprocessors function as a coordinated unit or a servo processing "engine" and thereby enable a multi-axis robot control to provide significantly improved robot performance with control unit manufacturing economy.

Generally, the processors 202 and 204 are tightly coupled within the multiprocessor architecture, and the signal processor 204 operates as a slave peripheral device to the manager 202. Coordination of the servo engine is provided by software control in the manager processor 202 through the interface 206. Thus, upward and downward data communications to circuitry 210 and 212 are placed under supervisory computer control.

Preferably, two interface paths are provided between the two microprocessors. One interface path enables the manager 202 to specify slave processor execution functions. The other interface path is used for commands, status and data, i.e., to command execution of selected slave functions, to provide data to be used in execution of the function, and to return status and data results produced as a result of execution.

A Motorola 68000 device may be employed for the manager 202 and a Texas Instruments TMS 320 device may be employed for the calculator 204. The Motorola 68000 microprocessor used in the specific torque control embodiment of the multiprocessor servo control is a 16-bit microprocessor operating at 10.0 Mhz system clock frequency.

The TMS 320 processor uses a modified "Harvard" architecture for speed and flexibility. In a strict Harvard architecture, program and data memory lie in two separate spaces, permitting a full overlap of instruction fetch and execution. The modified Harvard architecture in the TMS 320 allows transfers between program and data spaces, thereby increasing the flexibility of the device.

High speed fixed point computational capability is provided by the TMS 320 since it uses internal hardware to implement functions typically implemented by software or microprogrammed firmware in other processors. For example, the TMS 320 contains a hardware multiplier that performs a 16 $\times$ 16 bit multiplication in 200 nanoseconds. Further, a hardware barrel shifter shifts data on its way into the ALU so that data alignment and multiplication can be performed in a single instruction.

Since the TMS 320 is primarily intended for use in stand alone applications, its external interface capability is limited. Thus, the TMS program memory or I/O operations cannot easily be suspended to allow concurrent access by the controlling manager processor 202. Thus, special interfacing circuitry is needed and it is provided in the form of the bank switched memory 206 which meets the special needs of the invention embodiment disclosed herein.

## TORQUE PROCESSOR BOARD CONCEPTS - TORQUE CONTROL EMBODIMENT OF MULTIPROCESSOR SERVO CONTROL

The torque processor (TP) board 600 provides a functional interface to the robot joint drive motors. Functionally, the TP board 600 implements the lowest level of control in the hierarchical control system, providing closed loop servo torque control for six robot axes. Physically, the TP board 600 electrically interfaces the robot path planning control system and the servo control (SCM) board with the arm interface (AIF) board 800, which in turn interfaces to the robot joint drive motors. The primary function of the TP board 600 is to regulate robot joint motor currents to commanded values by generating motor winding voltage commands which are executed using a pulse width modulation scheme on the AIF board.

The TP board 600 interfaces at one level to the SCM board, accepts from the SCM board torque commands and servo parameters for six axes and returns status data. The TP board 600 interfaces at a second lower level to the AIF board 800 providing servo voltage commands for the six robot axes. The AIF board 800 receives drive motor current, position and velocity feedback for closed loop control on the SCM and TP boards.

The TP board 600 employs the paired microprocessor to provide a number of features including the following:

1. Torque loop control for six axes (250 micro sec per 6 axes) for brush and brushless motors;
2. Software adjustable current offset - eliminates potentiometers;
3. Downloadable gains - arm dependent parameters can be downloaded from the SCM board;
4. PWM compensation;
5. Commutation compensation;
6. Current averaging for data logging and other purposes;
7. Current limit check;
8. Velocity monitoring (back emf) for safety check;
9. Energy check (IIT) to test stall condition;
10. Power-up self diagnostics; and
11. Downloadable diagnostics system.

## TORQUE PROCESSOR BOARD

More advanced robot performance is produced by digitally controlling the torque applied at the arm workpoint when the arm is in motion to control the arm workpoint position in accordance with a command trajectory. Axis drive forces are adjusted in accordance with actually experienced workpiece loading to satisfy position and trajectory commands with greater speed, accuracy and efficiency.

The torque control is embodied on a generic control circuit board 600 (Figures 4 and 6) called a torque processor (TP) board i.e., an electronic board usable to provide torque control for a wide variety of robots having different load capacities, different types of drives, different numbers of axes, etc.

The torque processor board 600 employs digital circuitry to generate voltage commands for each joint motor or axis drive on the basis of torque commands obtained from a higher control level (SCM board) and feedback currents obtained through the arm interface (AIF) board 800 from the axis drives. Thus, the torque control loops for all of the joint motors are closed through the TP board circuitry.

In the case of electric drives, the feedback current is the motor winding current which is proportional to actual motor torque. For hydraulic drives, the feedback signal is also proportional to actual motor torque.

The digital torque control circuitry is preferably structured with multiple digital processors so that needed control computation and control support functions can be achieved for all axes accurately and efficiently within sampling frequency requirements.

In particular, a torque control manager 602 interfaces with a dual port SCM interface memory 604 for the exchange of stored torque control data between the SCM (servo control module) and the TP (torque processor) control levels. Axis torque commands and control loop parameters are downloaded from the SCM to the TP interface memory 604 through a data bus 606 preferably of the VME type. In return, status data is uploaded to the servo control level (SCM). The memory interface 604 between the TP and SCM boards is a dual port shared memory scheme which serves as a slave to the VME bus 606. Other board memories include a ping-pong memory 608, program EPROM, local RAM, and TP calculator memory.

The torque control manager 602 also directs the flow of current feedback from circuitry on the AIF board 800 at the next lower control level to the torque processor board 600 for torque control loop operation. Drive voltage commands resulting from torque control calculations are directed to the arm interface (AIF) board 800 by the torque control manager 602. The ping-pong (bank switched) memory 608 operates under the control of handshake flags to store command, feedback, and status data so that it is available when needed for torque control calculations or for higher a higher control level (SCM board) and feedback currents obtained through the arm interface (AIF) board 800 from the axis drives. Thus, the torque control loops for all of the joint motors are closed through the TP board circuitry.

In the case of electric drives, the feedback current is the motor winding current which is proportional to actual motor torque. For hydraulic drives, the feedback signal is also proportional to actual motor torque.

The digital torque control circuitry is preferably structured with multiple digital processors so that needed control computation and control support functions can be achieved for all axes accurately and efficiently within sampling frequency requirements.

In particular, a torque control manager 602 interfaces with a dual port SCM interface memory 604 for the exchange of stored torque control data between the SCM (servo control module) and the TP (torque processor) control levels. Axis torque commands and control loop parameters are downloaded from the SCM to the TP interface memory 604 through a data bus. 606 preferably of the VME type. In return, status data is uploaded to the servo control level (SCM). The memory interface 604 between the TP and SCM boards is a dual port shared memory scheme which serves as a slave to the VME bus 606. Other board memories include a ping-pong memory 608, program EPROM, local RAM, and TP calculator memory.

The torque control manager 602 also directs the flow of current feedback from circuitry on the AIF board 800 at the next lower control level to the torque processor board 600 for torque control loop operation. Drive voltage commands resulting from torque control calculations are directed to the arm interface (AIF) board 800 by the torque control manager 602. The ping-pong (bank switched) memory 608 operates under the control of handshake flags to store command, feedback, and status data so that it is available when needed for torque control calculations or for higher control level reporting requirements or for axis drive control.

A coprocessor 610 provided in the form of a digital signal processor operates as a torque loop calculator which receives torque commands and feedback currents from the torque control manager 602 through the ping-pong memory 608, calculates drive voltage commands for the varius robot axes from the torque errors computed from the torque commands and feedback currents, and transfers the drive voltage commands through the ping-pong memory 608 to the arm interface circuitry on command from the torque control manager 602.

With the described digital circuit structure, all needed torque control functions are able to be performed rapidly (250 microsecond sampling rate or better) and accurately within frequency response requirements. Specifically, the rapid calculating capability of the digital signal processor 610 is employed for the torque control calculations as the data organizing and directing capability of the torque control manager 602 is employed for most other functions thereby enabling highly improved control performance to be achieved efficiently and economically.

The torque control manager 602 has an architecture well suited for the tasks described for data management but which has a calculating speed (i.e., over 4 microseconds for a $16 \times 16$ bit multiplication) too limited to meet torque control bandwidth requirements. The digital signal processor 610 has an architecture set for Z transform calculations (i.e., a calculating speed of 200 nanoseconds for a $16 \times 16$ bit multiplication) but which is otherwise generally unsuitable for the kinds of tasks assigned to the data manager processor 602. These two microprocessors function together as a unit or, in other terms, as a servo engine.

9

TORQUE CONTROL PROGRAMMING

The torque processor board 600 is operated under the control of programs executed in the on board processors 602 and 610 to implement torque command signals from the higher SCM control level.

The torque processor software generally performs the following tasks which are partitioned as indicated:

Torque Control Manager 602

Communication with SCM
Command handling
Current sampling, conversion and offset adjustment
Commutation switch flag (state reading)
Ping-pong memory management
PWM chip management
Diagnostics
Error reporting

Torque Loop Calculator 610

(program cycling based on 250 microsecond interrupt)

Overcurrent check - absolute and average
Torque loop calculations
Current averaging
PWM compensation
Commutation compensation
Back emf check - monitors velocity for safety
Energy check - tests for stall conditions

TP MANAGER

More particularly, the torque control manager 602, as its name implies, directs most of the torque processor board operations. The torque loop calculator 610 affects board operations in the sense that calculated outputs enable certain board operations to occur under the direction of the torque control manager 602.

The programming for the torque control manager 602 includes various conventional system housekeeping programs which support the operation of application programs involved in embodying the invention. The application programming is stored in an EPROM memory 614 referred to as the TCM (torque control management) program memory. Operating data is stored in a local RAM memory 616 referred to as a TC (torque control) data base memory.

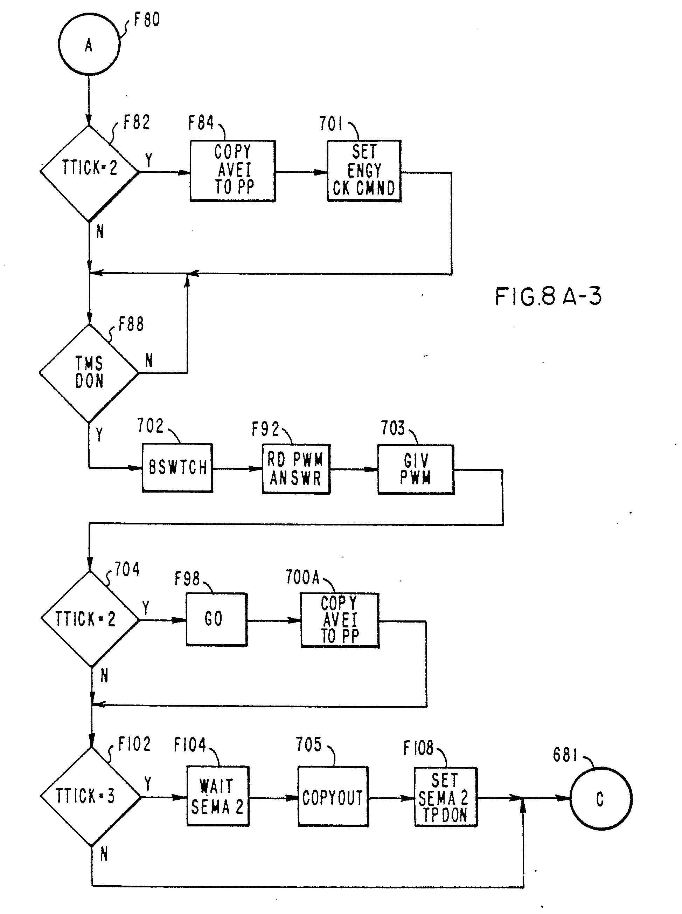

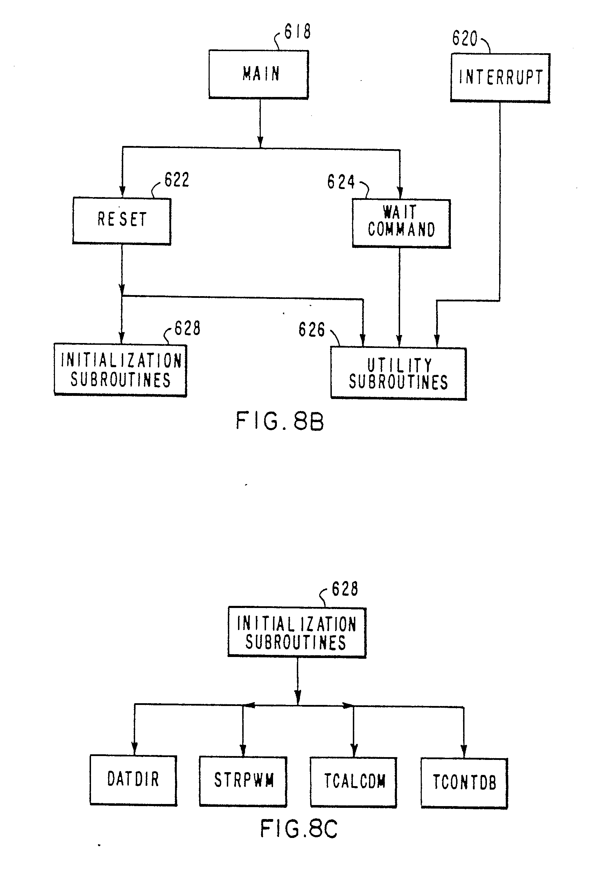

Referring to Figure 8B, the torque control management programs include a main program 618 and an interrupt program 620. Generally, the main program 618 includes a reset subprogram 622 which provides the initialization service program 628 needed at the arm interface and torque processor control levels for startup of TP board operation. The reset subprogram 622 additionally signals the higher SCM control level when the TP board 600 is ready for operating commands.

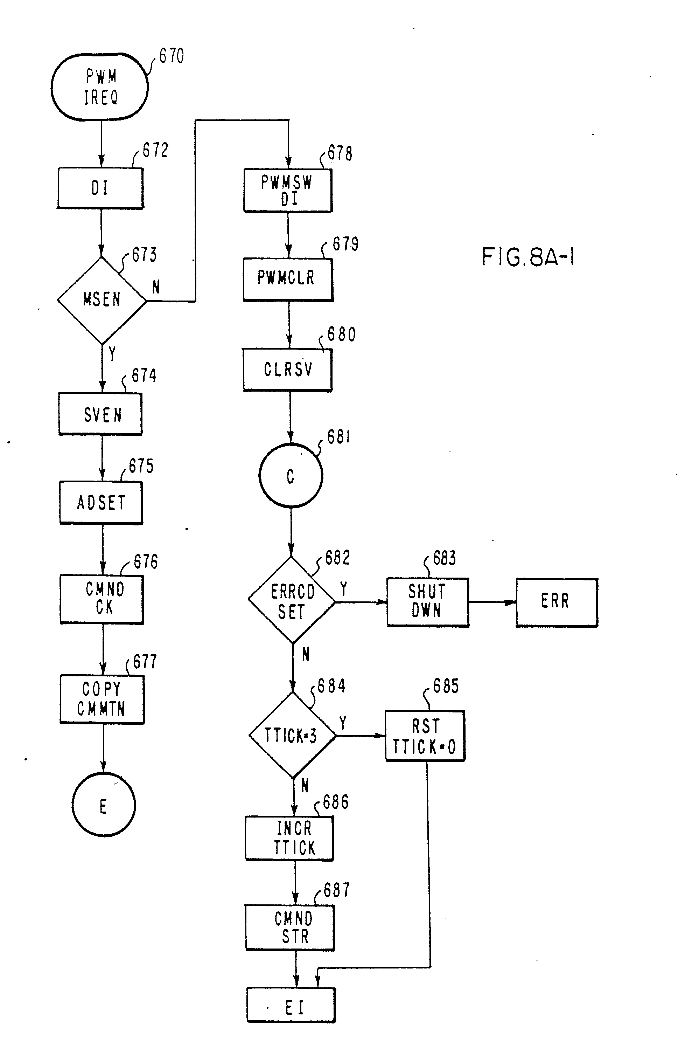

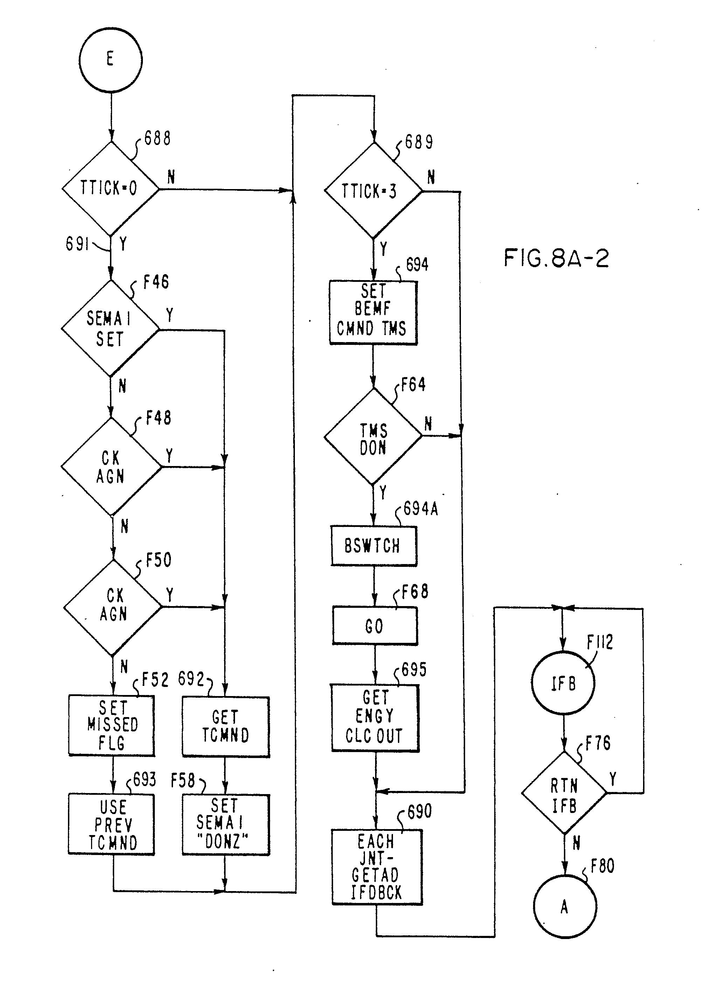

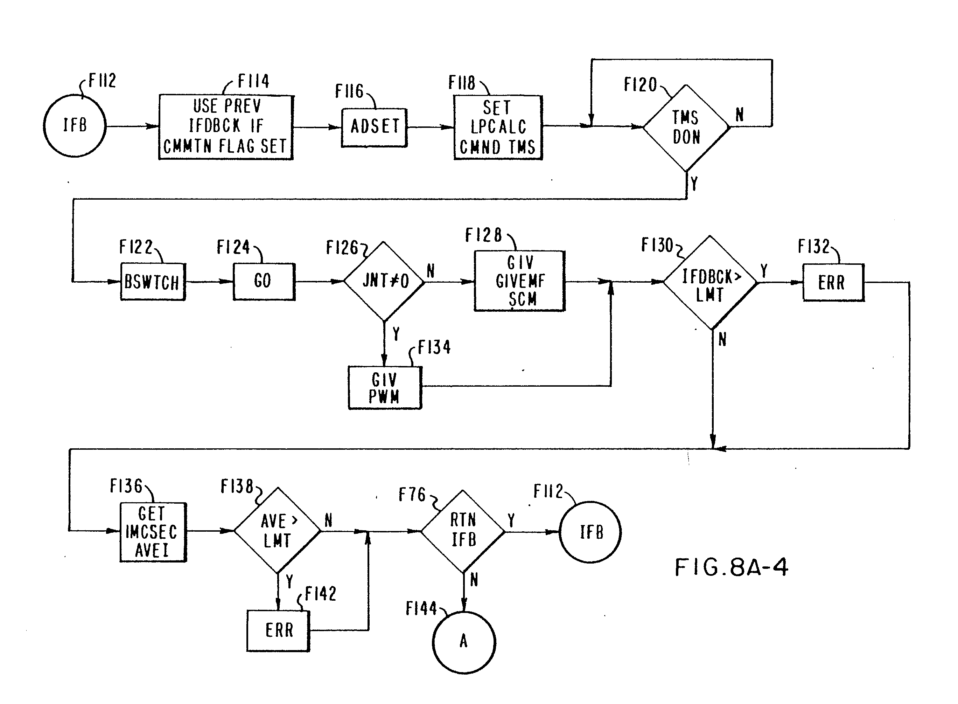

Thereafter, a wait command subprogram 624 administers the execution of diagnostic and other high priority nonmotion commands from the higher SCM control level. During motion control, torque commands are periodically generated, preferably each millisecond, and transferred under the control of the torque manager interrupt program 620 (Figures 8A1 through 8A4) through the ping-pong memory 608 to the torque loop calculator 610 (see Figure 6). The interrupt program 620 is operated cyclically by interrupt signals generated at the sampling rate (preferably every 250 microseconds) by an interrupt clock located in the lower control level AIF board 800. The interrupt clock also provides the timing control for generation of the SCM torque commands every millisecond.

The interrupt program 620 in turn performs various administrative functions needed to support the operation of the torque loop calculator 610 as it performs torque calculations for each of the six axes of the robot arm during each interrupt cycle. Voltage commands resulting from torque loop calculations are routed from the ping-pong memory 608 for storage in the TC data base memory 616 and then through a data bus 607 and bus interface, preferably the VMX type, to the AIF board circuitry for conversion to pulse width modulated signals by the axis drives. Current and status feedback data is also transferred from the VMX bus and interface 607 for storage in the TC data base memory 616 and subsequent routing through the ping-pong memory 608 for use in the torque calculator 610.

The bus 607 operates in the specific embodiment in accordance with VMX specifications for timing and signal pin number association. However, full VMX bus specifications associated with arbitration, multiple bus masters, and 24-bit address capability are not supported. Further, certain signals not specified in the VMX bus specifications are employed for control, interrupt, and error condition status information.

Referring back to Figure 8B, various subroutines 626 are employed by the reset and wait command subprograms 622 and 624 and the interrupt program 620. The reset subprogram 622 also employs initialization subroutines 628.

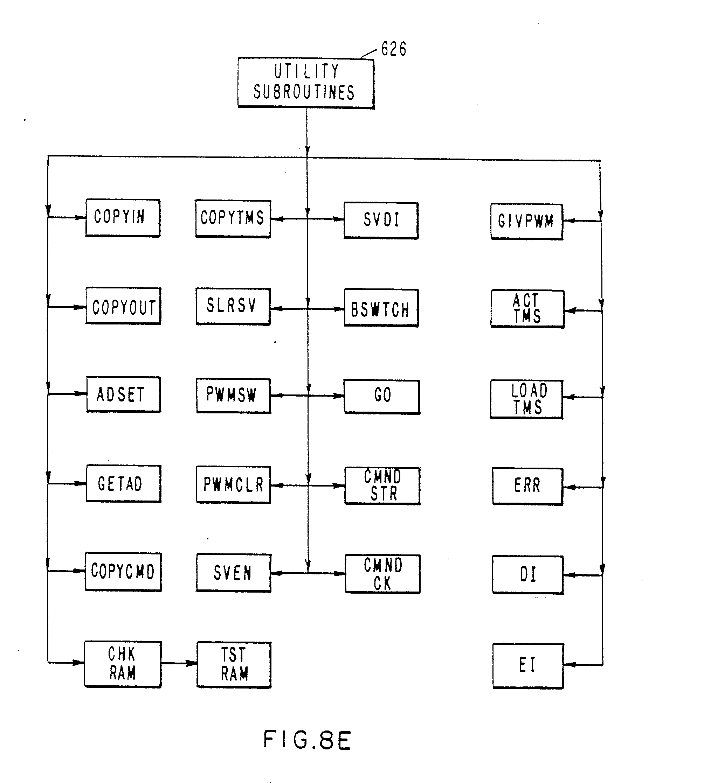

As shown in Figure 8E, the utility subroutines 626 include the following with the functions indicated:

CHECKRAM - preselected memory diagnostics - check all RAM memories on board 600.

RAMTEST - apply bit tests to selected memory locations.

GETAD - enable transfer of analog input to memory.

AD-SET - set analog/digital converters in feedback channels.

COPYIN - copy specified parameters for 6 arm joints from torque control data SCM interface memory 604 to TC data base memory 616.

COPYOUT - copy specified parameters for 6 arm joints from TC data base memory 616 to torque control data SCM interface memory 604.

COPYTMS/S-COPYTMS - copy to/from TC data base memory 616 and ping-pong memory 608.

COPYCMD - copy command from TC data base memory 616 to ping-pong memory 608.

CLRSERVO - clear on-line torque loop calculation data in TC data base memory 616 and ping-pong memory 608.

PWMSW - on/off switch for PWM chip which is located in the arm interface control level and normally generates power amplifier commands for the arm drives.

PWMCLEAR - zero output command to PWM chip.

SVENABLE - specify maximum voltage command acceptable for execution.

SVDISABLE - hold PWM at zero output. LOADTMS - download program to RAM memory 611 for the torque loop calculator 610.

ACTTMS - activate/deactivate torque loop calculator 610.

GIVPWM - apply voltage command to PWM chip.

COMMCHECK - receive position feedback data for all 6 drives and set respective flags if different from the next previous data.

COMMSTORE - store commutation state for all 6 joint motors.

GO - send GO signal to control register 630 (Figure 6A) for torque loop calculator 610.

BSWITCH - switch command for ping-pong memory 608.

ERR - report error to higher SCM control level.

DI - disable execution of interrupt program 620.

EI - enable execution of interrupt program 620.

The initialization subroutines 628 employed in the reset subprogram are shown in Figure 8C and include the following:

DATDIR - create in the TC data base memory 616 a data directory for the SCM interface memory 604.

STRPWM - store PWM I/O address in TC data base memory 616.

TCALCDB - clear and initialize the torque loop calculator data base in the internal RAM memory of the torque loop calculator 610.

TCONTDB - clear data base parameters in the TC data base memory 616.


## PROGRAM FLOW CHARTS FOR TP BOARD MICROPROCESSORS

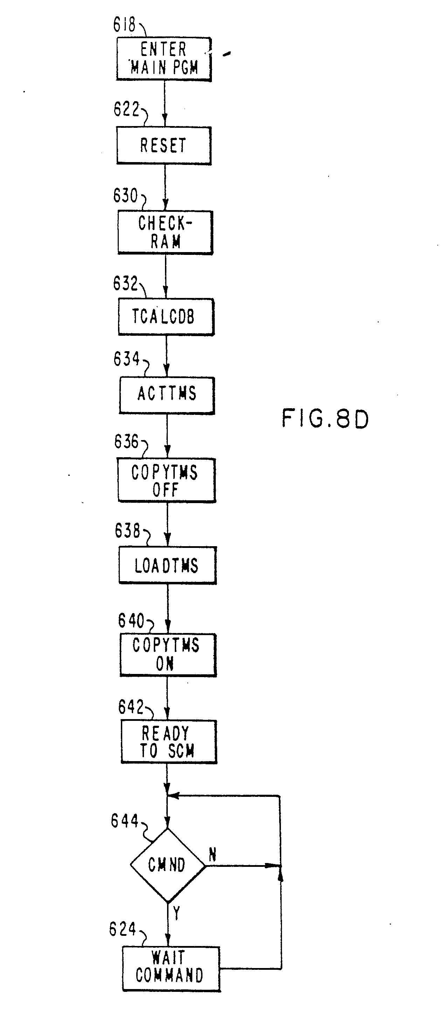

The main program 618 is illustrated in greater detail in Figure 8D. Once the torque processor board 600 is started, the torque control manager 602 enters the main program 618 and executes the reset subprogram 622 to provide initialization service. As a result, the identification code for the torque control manager 602 is written onto the VME data bus 606 via the dual port SCM interface for communication to the higher control levels that may be packaged together in any particular robot application.

In addition, all semaphores are set to the same invalid state and the torque loop calculator 610 is cleared and reset. The local input/output hardware latch 607 operates as a selector for hardware or software control for the torque loop calculator 610 and a flag is set to enable control from the torque control manager 602 when the software control flag is set.

In its final phase of execution, the reset subprogram 622 calls the utility subroutine PWMEN and a signal is thus generated for the next lower control level (arm interface level) to clear the arm drive circuitry and specifically to switch a controlling digital device referred to as the PWM chip to the OFF state.

The main program 618 continues the start-up procedure by calling the utility subroutine CHECKRAM in block 630 to provide memory diagnostics on all RAM memories on the TP card 600. Next, the initialization subroutine TCALCDB is called as indicated at 632 to clear/initialize the torque loop calculator data base in the TC data base memory 616.

The torque loop calculator 610 is then activated to the ON state by the subroutine ACTTMS as shown at 634. Next, the utility subroutine COPYTMS is called in block 636 to disable data copy to and from the TC data base memory 616 and the ping-pong memory 608. The utility subroutine LOADTMS is then called to download the TMS programming to the memory 611 as indicated at 638.

In block 640, the utility subroutine COPYTMS is again executed to enable copy to and from the TC data base memory 616 and the ping-pong memory 608. A signal is then generated by block 644 for the next higher SCM control level that the TP board 600 is now ready for robot control operation.

During subsequent active robot control operation, the main program 618 enters a wait command mode in which it undergoes continuous looping operating awaiting special high priority commands that may be generated by the higher SCM control level. Thus, block 644 determines whether a special command has been sent down to the TP board 600. Looping continues on the block 644 until a command is detected at which time the wait command subprogram 624 is called. After its execution, the command detection loop is re-entered until the next SCM command is received. In the block 644, SCM command detection is performed by looking at semaphore 3 to determine whether a flag has been set to signify that the higher SCM control level has downloaded a special command to the TP board 600.

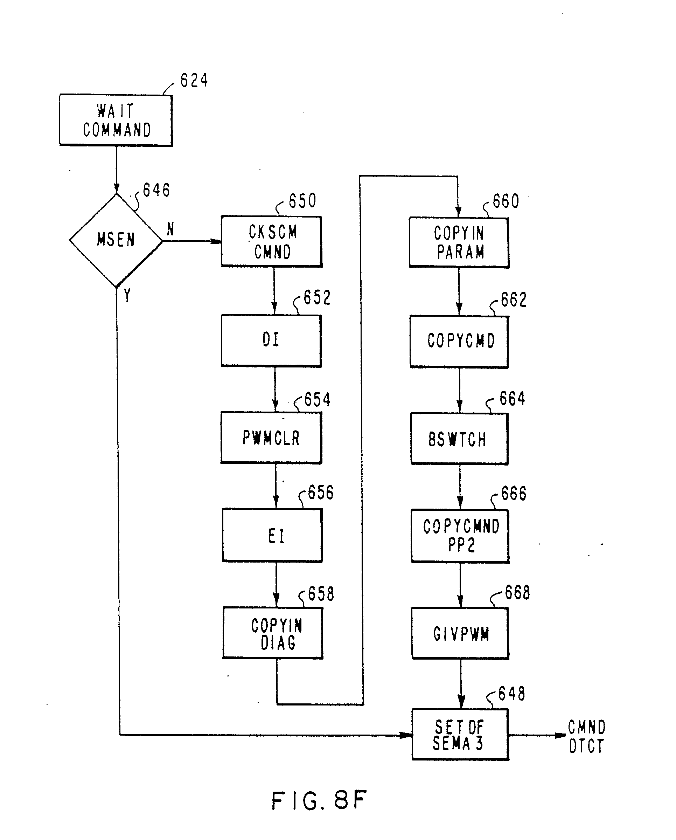

As shown in Figure 8F, the wait command subprogram 624 first determines whether the system is ready for controlled robot arm motion, i.e., whether the higher SCM control level has just generated a master servo enable signal as indicated in block 646. In the master servo enabled mode, the SCM control generates a series of torque command signals for execution by the TP board 600. Preferably, the torque commands are generated once each millisecond as clocked from the AIF control level.

If a master servo enable signal has been generated to provide priority motion control, block 648 sets the semaphore 3 flag down acknowledging to the higher SCM control level that the command has been received and that a response has been taken. The wait command subprogram then returns to the SCM command detection loop as robot arm motion control is implemented.

On the other hand, if the master servo is disabled, block 650 first checks an SCM command setup bit and block 652 next disables interrupt program execution since a command having higher priority than motion commands must be ascertained and implemented. Block 654 then calls the subroutine PWMCLEAR to set the output voltage command to zero. Next, the interrupt program is enabled to resume arm motion control on an interrupt control basis.

In blocks 658 and 660, a determination is made whether a diagnostic command or a parameter change command has been downloaded, and the SCM command is copied by the subroutine COPYIN in the TP data base memory 616 for execution. Block 662 executes the utility subroutine COPYCMD to transfer the command to bank 1 of the ping-pong memory 608. Thereafter, BSWITCH is executed by block 664 to enable block 666 to transfer the SCM command to bank 2 of the ping-pong memory 608. In turn, the torque loop calculator 610 then executes the SCM command, and block 668 generates a signal for the SCM control level that the downloaded SCM command has been executed. The block 648 then sets the semaphore 3 down flag and program execution continues as previously described.

The interrupt program 620 is shown in greater flow chart detail in Figures 8A1 through 8A4. It is initiated as indicated at block 670 shown in Figures 8A1 once the interrupt clock signal from the AIF board 800 is enabled in the wait command subprogram 624. Thereafter, it is executed at the control loop sampling rate, i.e., the interrupt rate of once every 250 microseconds.

Referring to Figure 8A1, block 672 disables the interrupt and block 673 determines whether the master servo is enabled to permit robot control. If it is, the SV-ENABLE, ADSET, COMMCHECK and COMMSTORE utilities are executed in blocks 674-677.

If the master servo is not enabled, i.e., robot control is not permitted, PWMSW subroutine is executed in block 678 to disable PWM motor control chips on the AIF board 800 and the utilities PWMCLR and CLRSV are executed in blocks 679 and 680.

Thereafter, an end interrupt branch 681 is entered and block 682 checks for shutdown errors. Block 683 executed robot shutdown if shutdown error exists. If block 684 detects that the interrupt clock tick (generated every 250 microseconds) has reached a 3 count in the current millisecond common cycle time, block 685 resets the counter to 0 and the program ends. If not, block 686 increments the counter, block 687 stores the motor commutation states and the program ends.

With reference to Figure 8A2 for the case of an enabled master servo, after the utility programs 674-677 are executed, blocks 688 and 689 check for a tick count of 0 and 3. If neither exists, block 690 next gets the current feedback for each robot axis. If the tick count is zero, branch 691 gets the new torque command (box 692) or, if missed, uses the previous torque command (box 693). At the tick count of 3, back emf command is set to TMS (box 694) and energy calculation output is obtained (box 695) and the ping-pong memory switch is set (box 694A).

The routine for fetching current feedback and performing other functions to be performed after each tick is designated as IFB, and it is looped until the six axes have been completed. As shown in Figure 8A4, the ping-pong memory switch BSWTCH is set in block F122, PWM voltage commands are outputted by box F134 and BACKEMF is outputted by box F128. Limit checks are also made at F130 and F138. Thereafter, program is branched to F80 via F76.

Referring to Figure 8A3, at F82 if TICK = 2, box F84 copies average current to the ping-pong memory and box 701 sets the energy check command. Box 702 sets the ping-pong memory switch and box 703 outputs PWM voltage commands once TMS operations have been performed via F88.

Block 704 again checks the tick counter and if the count had not been but is now 2, block 700A copies average current to the ping-pong memory. Thereafter, flags are set and certain data is copied out in block 705 if the tick count is identified as 3 in block FI02. Finally, the end interrupt branch 681 is entered to close out the execution of the interrupt program 620 using instructions shown at 682-687 in Figure 8A1.

## TP CALCULATOR

Programming for the TP calculator 610 includes a MAIN program being executed cyclically at the sampling rate. The main program provides calculator (TMS) reset, and calculator (TMS) RAM check, clear and initialization and thereafter, waits for a torque command from the torque manager 602.

When the availability of a torque command is indicated, the torque loop control algorithm is executed for all six joint motors. Then, energy calculations are made and back emfs are calculated prior to ending the program execution.

## CONTROL ALGORITHMS

A more detailed diagram of the torque control loop portion of the overall robot control is shown in Figures 7A3. The following control algorithms are executed in the torque loop calculator 610 in the implementation of the torque control loop portion of the overall robot control loop arrangement.

## PI Control Algorithm

This algorithm is described in terms of a 250 microsecond sample period.

1) Input: torque command      Tc from SCM (1 ms. update rate)
feedback torque      T from A/D converter (250 micro sec. update rate)

Tc, T are scaled as follows: 10 significant bits stored in 16-bit quantity left justified with a sign bits. This format is selected to simplify the A/D interfacing.

SDDD DDDD DDXX XXXX

13

Output: PWM command    PWMout to PWM command register (250 micro sec. update rate)

2) Principle:

$$PWMin = Kp \frac{(s + 1/tau)}{s} *Terr$$

Terr = Tc - T

Kp : torque loop proportional gain
tau : time constant of integral (mechanical time constant of motor)

3) Algorithm    /* get error */
T(n) = (input data from A/D)
    /* normalize the size */
Terr = (Tc(n)*2**10 - T(n)*2**10)/2**16
    /* compute next integral */
temp(n) = integ + KI * Terr
    /* check the integration limit */
if (temp <= - intlmt) then temp = -intlmt
if (intlmt <= temp) then temp = intlmt
    /* store the integral value for next time */
integ = temp
    /* get PI result */
temp = integ/2**16 + KP * Terr
    /* check the overflow */
if (temp > 78FF) then temp = 78FF
if (temp > 8680) then temp = 8680
    /* now linearize the PWM */
if (temp >= 200) then PWMout = temp + 700
if (200>temp >=0) then PWMout = temp *2 + 500
if (0>temp >= FDCO) then PWMout = temp *2 + FB80
if (FDCO > temp) then PWMout = temp + F980

KI = (KP/tau)*Ts
Ts = sample period = 250 micro sec.

4) Scaling of KP and KI

```
    i)   dimensions    kp : [V/N-M]
                        tau,TS : [sec]


Torque       Current      Terr*2**6       PWMout      Motor Volt
 N-M          A           bits            bits        Volt
>------Kt----------Kad--------.-KP*2**-16-----Kpwm--------->

   <============================Kp=======================>
```

torque - current gain [A/N-M]
Kad A/D converter gain [bit/A]
Kpwm PWM gain [V/bit]

ii) equation

Kt*(Kad)*KP*(2**(10-16)*Kpwm = Kp
Kp = kP*(2*6)/(Kt*Kad*Kpwm)
KI = KP*Ts/tau

Note:

1. If A/D converter full scale is + - Imax then Kad = 2**15/Imax [bit/A]
2. If PWM chip and power block gain is +/- Vmax then Kpwm - Vmax/2**15 [V/bit], therefore,
Kad*Kpwm = Vmax/Imax [V/A]

Back-emf Algorithm

The back-emf EMF calculation is used to provide an estimate of motor speed for safety purposes.

1) Input: motor current      i from A/D converter
motor voltage      Vin from PWM command register


Output:    Back-emf      VEL estimated velocity


2) Principle:    VEL = w*Ke = Vin - (L*di/dt + iR)
        R = motor resistant      [ohm]
        L = motor inductance      [H]
        Vin = motor terminal voltage      [V]

Ke = motor Back-emf constant    [V/rad/sec]
w = motor velocity    [rad·sec] .
i = motor current    [A]

3) Algorithm: VEL(n) = [PWMout*2**9 - MOTL* i(n)-i(n-1) - i(n)*MOTR]/2**16

where:

i(n) is A/D value shifted right 6 bits and accumulated 1 mesc/Ts times (running 1 msec average).
Ts is PWM sample rate = 250 micro sec

4) Scaling of L, R:

i) equations:    MOTR = 2**13 * Imax/Vmax * R(ohm)
   MOTL = 2**13 * Imax/Vmax * 1/delt * L(H)
   SV = 2**-8 * Vmax
      where Krpm = (SV/KE) * VEL

ii) example:    Vmax = 300V, Imax = 20A, R = 0.49 ohm, L = 5.5 mh
   KE = 120V/Krpm, delt = 4 msec
   MOTR = 268, MOTL - 751
   Krpm = 9.76 * 10**-3 * VEL

```
    Vin              PWMout              VEL              VELemf
    V                 bits               bits              bits
    -----Kpwm----------2**-9--+--------2**-16*SV-----1/KE---
                              |
                              |
    Iin                       |
    A                         |          Kpwm = Vmax/2**15
    -----Kad--2***2-6)--MOTR- |          Kad  = 2**15/Imax
                    --MOTL- |
```

Energy Check Algorithm

    The energy check calculates motor energy and alarms the SCF when energy exceeds a specified limit
for a specified period of time.

1) Input: current        CUR1 1 msec averaged current
   energy limit    ELIMIT from SCM (constant)
   time constant    TAU from SCM (constant)

Output:    alarm    ECODE to SCM

16

2) Principle:

```
              i*i               Energy
    i------x---------1/(1+as)--------Threshold-------Alarm
    |  .   |              1st order filter
    |---   |
                    i = current [A]
```

3) Algorithm:    temp   = CUR1~2 - ENERGY
   ZOENGY = ZOENGY + temp
   ENERGY = ZOENGY / 2~16 * TAU

if ENERGY > ELIMIT
     then ECODE ·= OVENGY


4) Scaling:

i) condition of alarm output

   if step input of i~2 = k·limit is applied. then output an alarm condition tx seconds after step is applied.


ii) equation

   a = delt * 2~16/TAU
   TAU = delt * 2~16/a
   , = about 20 to 40 for·delt = 4 msec


TP CYCLING OPERATION

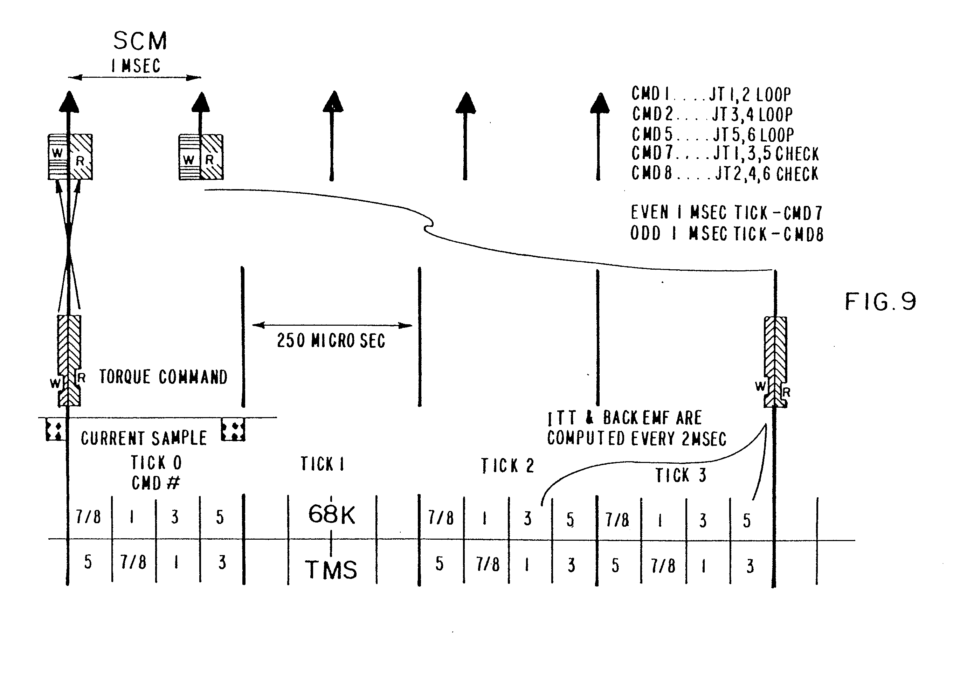

   The cyclic operation of the TP circuitry is shown in Figure 9 to clarify the manner in which the various control events are interselected. As shown by the upper scale, the SCM board 400 operates on a 1 millisecond cycle. The TP board 600 operates on a 1/4 millisecond sampling cycle as shown by the lower scale. The four TP board sampling intervals are marked by ticks 0 through 3.
   The latest torque commands are received by the torque manager 600 in the order shown in each sampling interval for the six joints on the 68K scale. With a 62.5 microsecond delay, the torque commands are transferred to the TP calculator in the same order. Current feedbacks are received at the beginning of each sampling interval for all joints and transferred to the TP calculator.


TORQUE PROCESSOR SOFTWARE COMMENTS

   The following provides additional detail on the operation of the TP board:


MEMORY MAP

   As it is described in torque processor hardware document. the module has program EPROM, local RAM, shared RAM (VME), TMS ping-pong ram and TMS program RAM. The address is as follows:
   000000    007fff    EPROM
   034000    037fff    Shared RAM (VME address
                       900000 - 903fff)

```
038000    03bfff    Local RAM
03c000    03c3ff     Ping-Pong RAM
                    (two banks)
040000    041fff    TMS Program Memory
```

## INTERRUPT SIGNALS

The 68000 microprocessor 602 has seven levels of user interrupts. All of these are vectored interrupts. In the TP hardware, three levels of interrupts referred to as level 7, 6 and level 5 are available. Level 7 is a non-maskable interrupt (NMI) which can be caused by two sources described below.

The following is a description of the interrupts used in the arm interface:

Level 7 (NMI):

1) PWM chip fail or PWM down signal. Indicates problem in PWM chip or no new PWM command in 2 consecutive PWM cycles.

2) Watch Dog Timer - time out.

Level 6 (PWMIREQ): PWM interrupt request generated by PWM chip. Used to initiate torque loop calculations. 4Khz (250 micro sec.).

Level 5 (VTICK): 1 msec servo cycle tick.

Hardware failure type errors such as address error is incorporated in the 68000 trap vectors.

## PWM GATE ARRAY

The PWM chip shown in Figures 7B1 and 13 has 8 bit mode and 16 bit mode operation. In the torque processor, 16 bit mode is used. For further details, refer to "GA1500 PRODUCT DATA" document.

| Address | Chip 1 |
| --- | --- |
| 80000 | PWM internal ramp counter register |
| 80002 | PWM control/status register |
| 80006 | PWM command register    Jt1 |
| 8000a | PWM command register    Jt2 |
| 8000e | PWM command register    Jt3 |

| Address | Chip 2 |
| --- | --- |
| 80040 | PWM internal ramp counter register |
| 80042 | PWM control/status register |
| 80046 | PWM command register    Jt4 |
| 8004a | PWM command register    Jt5 |
| 8004e | PWM command register    Jt6 |

## PROCESS TASK DISTRIBUTION

In order to optimize robot performance in a tight cycle time (250 micro sec.), the tasks are distributed among 68000 and TMS 320 as follows:

1. 68000
   1. Communication to the SCM
   2. Command Handling
   3. Current Sampling and Offset Storage
   4. Commutation State Reading
   5. Ping-Pong Memory Management
   6. PWM Chip Management

7. Diagnostics
8. Error Reporting
2. TMS 320
   1. Torque Loop Calculation
   2. Current Averaging
   3. Over Current Check (Absolute & Average)
   4. PWM Compensation
   5. Commutation Compensation
   6. Energy Check
   7. Back Emf Check


## PROCESS ALGORITHM

Loop is designed general enough to support brushless type motors for 860 series robots and RX robots and brush-type motors for PUMA series. In addition to electric motors, the torque processor will serve as pressure loop processor for hydraulic robots.


## INTERFACE TO SCM

Since the software overhead time is to be kept to a minimum, two buffers as shown in Figure 6 are needed with semaphore in the shared RAM. In this way, two processors can write or read different locations simultaneously.
   1. Buffer 1 - Data from SCM

Data from the SCM such as torque commands (1 msec) and parameters (>1 msec) must be written to this buffer.
   2. Buffer 2 - Data from torque processor

Data from the torque processor as feedback and status must be written to this buffer.


Note:

Refer INTFSPEC04-Torque Processor Interface Communication Spec.
Each buffer access will be controlled with the associated semaphore.
Semaphore - BUFFER1:
 SCM DONE - SCM finished writing
 TP DONE - TP finished reading

Semaphore - BUFFER2:
 SCM DONE - SCM finished reading
 TP DONE - TP finished writing

(SCM DONE = 55h, TP DONE = AAh)


The process is as follows:
   1. Initialize the semaphore-state to RESET = 0.
   2. The write processor writes data.
   3. Set semaphore to WRITE PROCESSOR DONE.
   4. Wait for 1 msec interrupt. (1 msec interrupt for SCM, 4th torque loop tick for TP.)
   5. The read processor reads data.
   6. Set semaphore to READ PROCESSOR DONE.
   7. Go to Step 2.

Note:

The data logger will read the data when WRITE PROCESSOR is done; however, the data logger will not set semaphore at the completion of reading.

The double buffer operation timing is as follows:

```
                        1 msec
                         tick
                          :              :              :
        Buffer 1
        SCM           w              w              w
        TP               r              r              r


        Buffer 2
        TP            w              w              w
        SCM              r              -              r
```

Since the TP timing is very critical, the buffer data structure MUST be designed by the torque processor software designer. This is to take advantages of 68000 instruction set and TP hardware architecture.

## INTERFACING BETWEEN 68000 AND TMS 320

TMS 320 interfacing is done via ping-pong memory exclusively with associated hardware circuits as shown in Figure 6.

## DOWNLOADABLE DIAGNOSTICS

Downloadable diagnostics mechanism is provided to test out TP related hardware, namely PWM chips and A/D, without requiring special EPROM in the TP or plugging a development system such as EMULOGIC or tutor board.

Upon power-up, the host computer such as SCM or Mizar CPU can download a TP diagnostics to the reserved shared RAM located (902000h to 903fffh) in the TP. When the normal start-up procedure such as self-diagnostics and initialization are completed, the SCM or other master device can issue diagnostics command to the TP (write 4000h to location 900004h). The moment the TP acknowledges the command, it will CALL subroutine located in 9020000h and return to the background task. It must be noted that the TP address and VME address is different, therefore all downloadable diagnostics must be relocatable.

## SERVO CONTROL BOARD - POSITION/VELOCITY CONTROL EMBODIMENT OF MULTIPROCESSOR SERVO CONTROL

A servo control module (SCM) or board 400 (Figure 4) is structured in accordance with the modular architecture of the robot control system to operate as a core board for a complete basic robot control and generate arm solutions from stored robot program commands or to operate as part of an expanded robot control and receive for implementation arm solutions produced from robot program commands by the higher level system control board 350. The generation of arm solutions involves the execution of robot control functions including robot program language interpretation, path planning, trajectory calculations (intermediate position commands and axis coordination) and transformation of position information between Cartesian and robot joint and robot tool coordinate systems. The SCM board 400 additionally provides communications interfacing with related peripherals and a host controller if provided.

The SCM board 400 is provided with program controlled digital circuitry to implement arm motion control loops for the robot control system. Motion control is achieved for each axis through a control loop arrangement which preferably includes interrelated position, velocity, and acceleration control loops from which torque commands are developed for implementation by the torque processor module 600. The digital servo control is a coordinated multiprocessor servo control that generates output torque commands from

20

(1) position and velocity commands provided for each axis by the arm solution and (2) position and velocity feedback signals obtained from the position encoders and the tachometers through the arm interface module 800.

In the SCM control loop operation, a position error is calculated for each axis from the applied axis position command and the axis position feedback. A velocity error is calculated for each axis from a velocity command derived from successive position commands and from the axis velocity feedback. Preferably, the position and velocity control loops are operated in parallel. i.e., the position and velocity errors are summed to produce a torque command for the torque control loop on the torque control module 600. Additionally, an acceleration command preferably is derived from successive velocity commands and applied in a feedforward acceleration control loop which generates an acceleration based torque command for summation with the position and velocity errors in generating the SCM output torque command.

The frequency with which loop calculations are made is selected to produce robot arm motion which is fast, accurate, smooth and stable. For example, the frequency employed can be such as to provide a trajectory cycle of 32 milliseconds as in the present case. If desired, a faster trajectory cycle, i.e., as short as 8 milliseconds, can be achieved.

## SCM DIGITAL CIRCUITRY

As observed in Figure 10, the SCM board 400 generally comprises two sections, i.e., a local processor section 401 and a system resource section 403. The system resource section 403 employs a bus 405 and provides functions related to the overall robot control system and not specifically related to execution of the position and velocity control loops.

These functions include EPROM 408 for storage of the robot arm solutions, battery backed-up RAM 410 for storage of non-volatile data, static RAM 412, real-time clock 415, a DMA controller 414 and two multi-protocol, dual channel communications controllers 416 and 418.

The system resource area is implemented as dual-port memory. As such, equal access to the system resource section is provided from either a local processor 401 or from the VME bus 420. The system resource functions appear as a bus slave to the VME bus. This provides the capability for these related functions to be controlled either from the SCM local processor, or from an optional processor connected to the system bus.

In the local processor section 401, the SCM digital circuitry includes coordinated digital coprocessors and interface and resource circuitry needed for specified performance, i.e., to provide control calculations and control data management needed for accurate and efficient control of all axes and to provide interfacing communication with a host controller, peripheral devices and other robot controllers. Preferably, a servo control manager 402 operates with a servo calculator 404 which functions as a slave processor principally to make position and velocity control loop calculations (i.e., feedback filters, loop gains, position and velocity errors, etc.).

The servo control manager 402 directs control, status and program data to and from the SCM board 400 and to and from the servo position/velocity control calculator 404. The servo control manager 402 can be a Motorola 68000 which has a high data processing capability. By separating data management and control calculation tasks in accordance with the respective capabilities of the processors 402 and 404, a basic circuit organization is provided as a basis for achieving substantially improved control performance with manufacturing and user economy.

In the illustrated embodiment, implementation of the local processor section of the SCM board 400 is based on usage of a 68000 processor as the servo control manager 402 and two coprocessors. Both coprocessors serve as peripheral devices to the 68000. One of the coprocessors 406 (preferably National Semiconductor 32081), provides floating-point calculation capability when arm solutions are to be provided by the SCM board 400. The other coprocessor, or slave processor, is the position/velocity servo calculator 404 and is implemented with a Texas Instruments TMS-32010 Digital Signal Processor. The position/velocity processor provides high speed fixed point calculation capability.

The remaining functions which are a part of the local processor section include local memory, both EPROM 422 and RAM 424, a peripheral timer/counter device, interrupt control 430, and system error monitoring devices 428. The local processor 402 can serve as a master to the VME bus for access to the TPM or other related type functions. However, the SCM board 400 does not provide VME bus system controller type functions which normally include system reset generation, bus arbitration for access to the bus and system bus clock generation, since these functions are implemented on the arm interface board 800.

The SCM board 400 is arranged to provide as much systems flexibility as is reasonably possible, and to obtain the maximum performance from available large scale integrated (LSI) circuitry. This is one of the reasons that the DMA and communications facilities are implemented in the system resource area as opposed to being directly connected to the local processor bus. This architecture not only frees the servo control manager 400 from direct intervention in communications data movement, it also eliminates the local processor bus communications related overhead, thus allowing high speed serial communications to be conducted without significant impact on program execution time in the servo control manager 400. Also, by placing these functions in the system resource area, these facilities can be operated by any other optional processor with capability of serving as a VME bus master. This would then totally free the servo control manager 400 from communications related processing. This organization allows the complete functionality required for a robot control system to be implemented in a cost effective manner and on a minimal set of boards while also allowing increased performance controllers to be implemented without impacting the overall system design.

Another significant area is the interface between the servo control manager 402 and the servo calculator 404. Here, a special dual port memory organization, referred to as "ping-pong" or "bank switched" memory allows either processor to communicate with the other without impacting the processing performance of either processor.

## PROGRAMMED OPERATION OF SERVO CONTROL BOARD

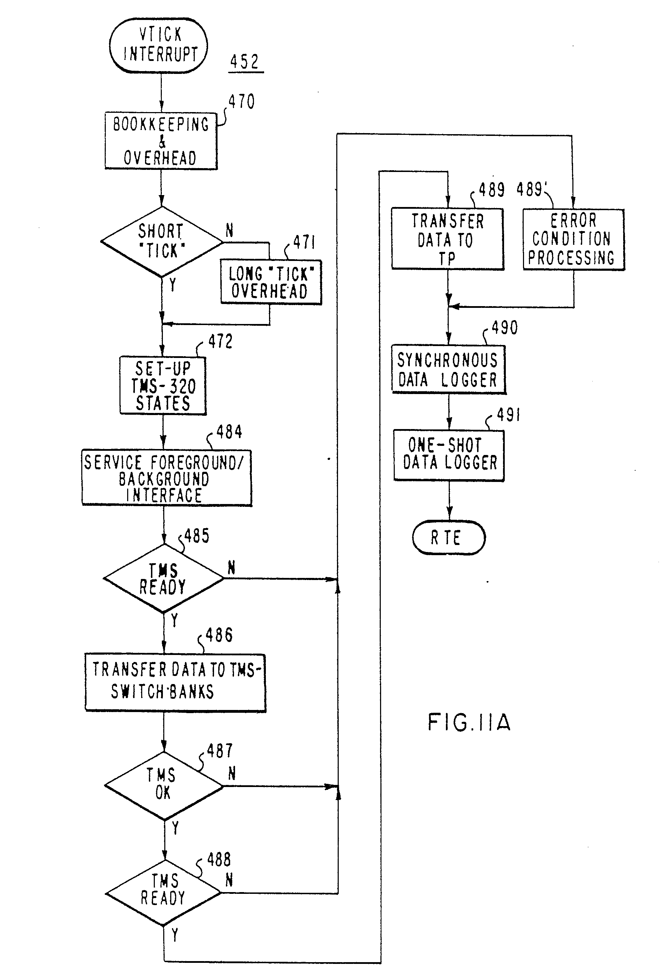

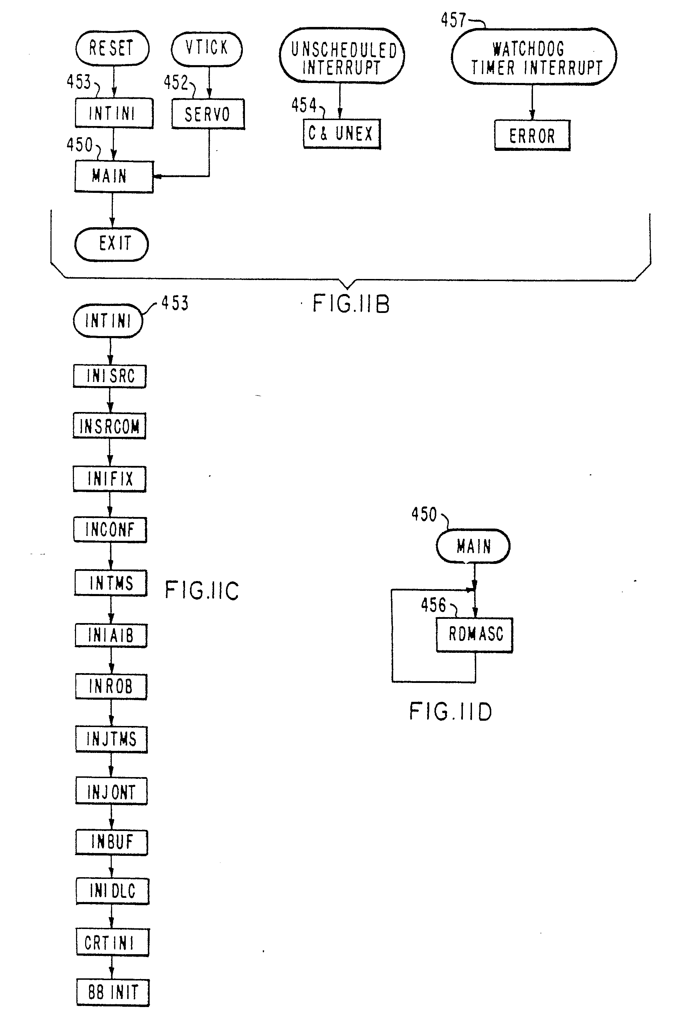

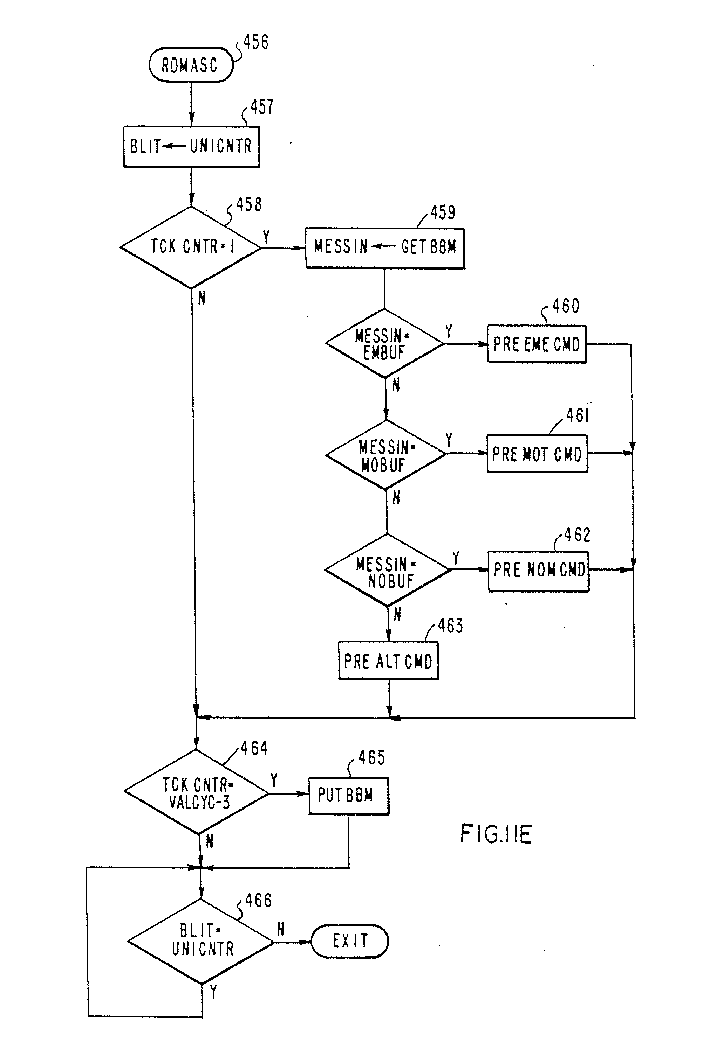

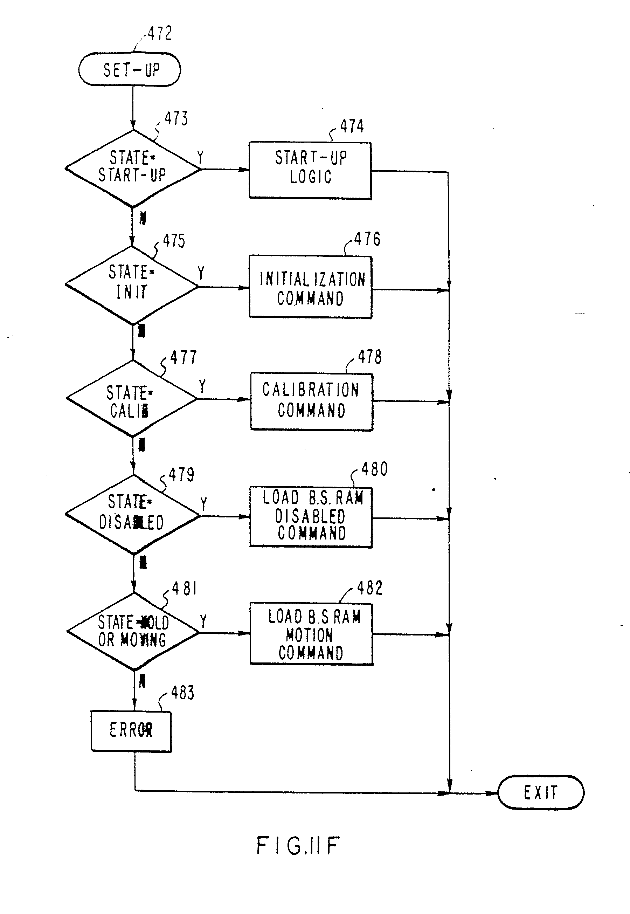

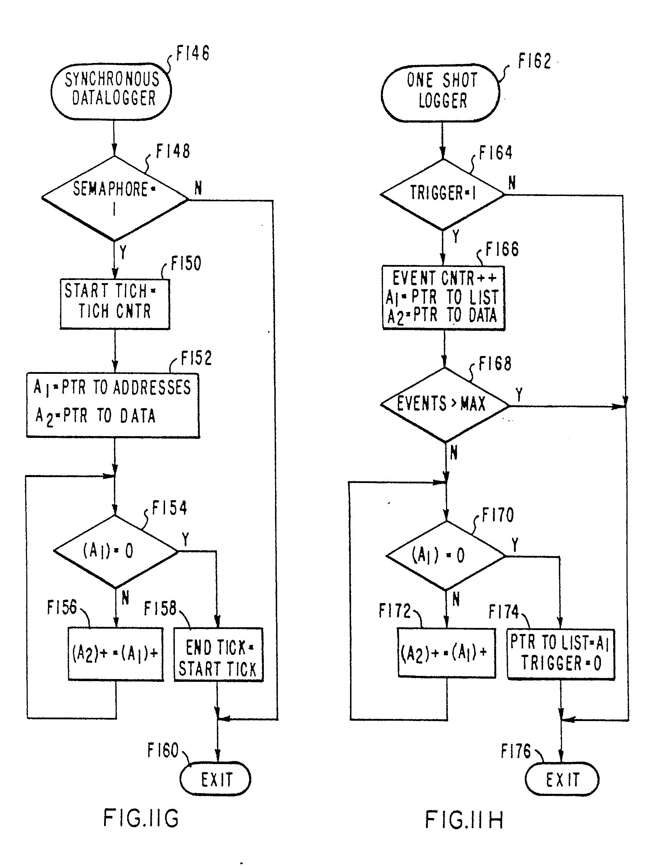

As schematically shown in Figure 11B, the program system for the servo control data manager 402 comprises a background program 450 called MAIN and a cyclically operated foreground interrupt routine 452 called SERVO. When the system is started as indicated to RESET, an initialization routine 453 is executed prior to continuous running of the MAIN program 450. In addition to the cyclically executed SERVO interrupt 452, an interrupt routine 454 called C$UNEX operates in the foreground on demand to process unscheduled or unexpected interrupts. Further, a special highest priority routine 457 called the watch dog timer interrupt functions in response to operation of the external watch dog hardware.

Where the robot control system includes the system control board 350 for higher performance through higher computing capacity, the MAIN program provides for receiving and distributing position commands from the system control board 350. In the minimum or basic robot control system configuration, the system control board 350 is not included and the MAIN program 450 further performs arm solutions to generate position commands locally on the servo control board 400. Additional description on the minimum robot control is presented subsequently herein.

The rate at which the MAIN program 450 is interrupted for the cyclical execution of the SERVO routine 452 is controlled by the signal VTICK generated once each millisecond on the VME bus 155 from the arm interface board 800. The basic functions provided by the SERVO routine 452 are:

1) transfer control data to and from the servo calculator 404;
2) transfer control data to and from the torque processor board 600;
3) receive sensor feedback data over the VME bus 155 from the arm interface board 800;
4) interface to the supporting background task RDMASC;
5) perform synchronous data logging;
6) perform one shot data logging;
7) place broadcast data in a blackboard storage area;
8) shut the system down if serious error conditions occur.

The initialization routine is shown in greater detail in Figure 11C. The process essentially comprises the performance of a series of tasks as indicated in the successive blocks in Figure 11C. The following list provides further information on the nature of these tasks:

```
TASK          INITIALIZATION

INISRC        bit-bus emulator for handshake
INSCROM       feedback interface
INIFIX        global variables
INCONF        robot default configuration
INTMS         servo calculator-download program store
INIAIB        torque processor board 600
INROB         robot software configuration
INJTMS        bank switch memory
INJONT        joint data structure via servo calculator
                  program memory and torque processor
                  board shared RAM reads
INBUF         internal buffer management areas
INIDLC        one shot and synchronous data logger
                  interface
CRTINI        input/output hardware-servo control
                  board 400
BBINIT        bit-bus emulator interface and handshake
                  with system control board 350
```

Once the system is initialized, the MAIN program 450 (Figure 11D) begins continuous cyclical background execution. As shown in Figures 11D and 11E, a routine 456 called RDMASC is run to provide ongoing reading of system position commands from the bit-bus emulator which is a designated memory area in shared RAM where system commands are deposited when received from the system control board 500 (Figure 4).

Viewed as a whole, the background and interrupt routine can take on the following finite servo states:

0 - Start-up state

1 - Initializing state

2 - Calibrating state

3 - Servo disabled state

4 - Servo enabled, hold state

5 - Servo enabled, moving state The background task is responsible for assuring that valid state transitions occur, and for sequencing the interrupt task to new states. The interrupt task is therefore written to accept "commanded" states and to supply "current" states. In addition, the background task is sequenced via commands from the bit-bus emulator. The following state transition table defines this operation:

| Current State | 36 | 17 | 45 | 1 | 16 | 34 | 20 | 2 | 18 | 46 |
|---|---|---|---|---|---|---|---|---|---|---|
| 1 | -1 | -1 | -1 | -1 | -1 | 2 | -1 | -1 | -1 | -1 |
| 2 | -1 | 3 | -1 | -1 | -1 | 2 | -1 | -1 | -1 | -1 |
| 3 | 3 | 3 | 3 | 4 | -1 | -1 | -1 | 3 | -1 | 3 |
| 4 | 4 | -1 | -1 | 3 | -1 | -1 | 5 | 4 | 4 | 4 |
| 5 | -1 | -1 | -1 | 3 | 4 | -1 | 5 | -1 | -1 | -1 |

(Command ID from bit-bus)

Where a "-1" indicates an illegal state transition. The bit-bus commands are defined as follows:

36 - Where command

17 - Calibrate command

45 - Install servo parameters command

1 - Enable/disable servos command

16 - Hold command

34 - Initialize command

20 - Normal motion command

2 - Brake command

18 - Limp command

46 - Upload current servo parameters command

Generally, a set of position commands is generated for the servo loops once each Valcycle, in this case once every 32 milliseconds. In turn, each Valcycle is measured by Vticks which are generated on the VME bus once every millisecond. There are thirty-two (32) Vticks in each VALCYCLE in this case.

A cycle counter named TCKCNTR counts the Vticks in each VALCYCLE. A running counter called UNICNTR keeps a summing count on Vticks up to $2^{31}$ ticks.

When the next previous VALCYCLE has been ended as indicated by the UNICNTR in block 457, block 458 operates on the beginning of the new VALCYCLE when TCKCNTR = 1 to initiate reception of the new set of position commands for the new VALCYCLE. Thus, block 459 reads the new commands from the bit-bus emulator.

If the command includes an emergency command (such as disable servo), block 460 directs the emergency command to an emergency command buffer. Block 461 sends motion (position) commands to a motion command buffer. Similarly, block 462 sends the non-motion commands to a non-motion command buffer.

The block 460, 461 and 462 perform like basic functions. First, the command is read from the bit-bus emulator in shared RAM. Next, prescribed checks are made to validate the command. Finally, the command is routed to the designated buffer in local non-shared internal RAM.

If no direction is found to transfer a system command to an internal RAM buffer, block 463 records a no command error and prepares an alternate command (same as last command or a shutdown if this is the second occurrence of this no command error).

Next, blocks 464 and 465 send a response to the system control board 500 that the newest command has been received when the value of the tick counter nears the end of the current VALCYCLE, i.e., when it equals the VALCYC minus three. Block 466 next repeatedly polls UNICNTR until RDMASC is to be re-executed to receive the next system command.

When a VTICK occurs (i.e., once every millisecond), RDMASC is temporarily interrupted for execution of the SERVO routine 452. As shown in the flowchart in Figure 11A, the SERVO routine 452 first performs needed bookkeeping and overhead tasks as indicated in block 470. For example, the watchdog timer is reset for the 2 millisecond interrupt. If the tick is a long tick, i.e., the tick counter equals one to mark the start of a new VALCYCLE, block 471 performs certain additional overhead tasks. The basic functions performed are: reset tick counter to 1; route the new position command from the system control board to the servo calculator; and process changes of state in the SERVO routine.

## LOADING DATA FOR SWITCHING TO THE SERVO CALCULATOR

If the tick is a short tick, i.e., an intermediate tick in the 32 tick cycle, or after long tick overhead has been performed, block 472 prepares for transferring data to the servo calculator by loading data to the back switched memory according to the state in which the servo calculator is to be.

The flowchart in Figure 11F shows the servo calculator setup in greater detail. If block 473 finds the calculator is to be in the start-up state, block 474 fetches data needed for start-up logic for downloading to the servo calculator 404. For the initialization state, blocks 475 and 476 fetch initialization command data for downloading to the servo calculator 404. Similarly, calibration command data is readied for the servo calculator 404 by blocks 477 and 478 for the calculator calibration state.

If the calculator is to be disabled, blocks 479 and 480 load into the bank switched memory a disabled command. Finally, if the calculator state is to be hold or moving, which covers most of the operating line, blocks 481 and 482 load motion command data into the bank switched memory. If none of the listed states are detected, block 483 records an error.

24

## DATA FLOW AND TIMING

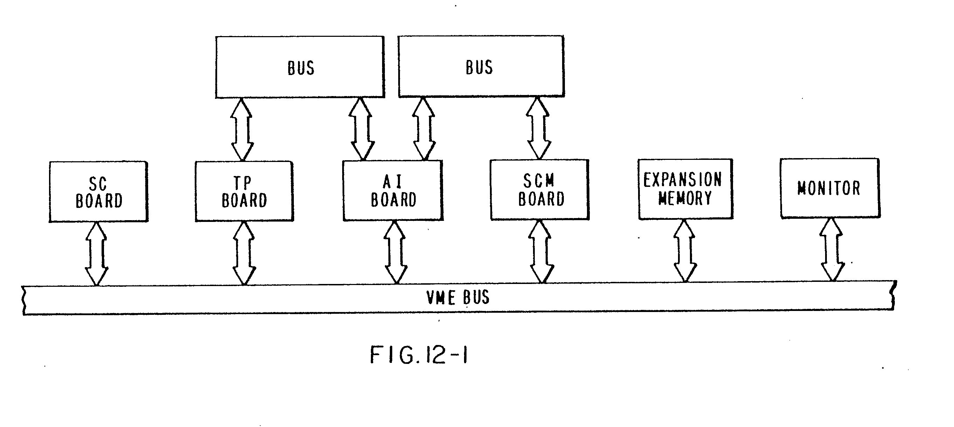

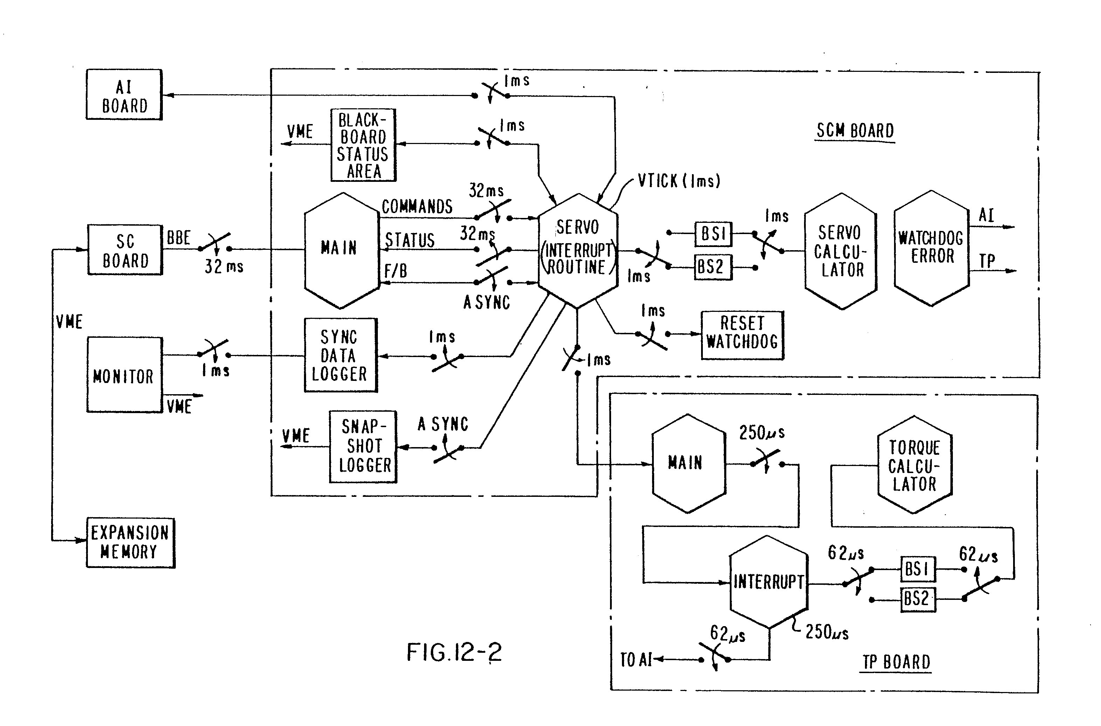

In the HOLD MOTION state, control data generally flows as follows as seen in overview Figure 12-2. Once every VALCYCLE, i.e., once every 32 milliseconds in this case, position command data for all axes is received by the servo control board main program from the system control board and shuttled through the bank switch memory to the servo calculator. Feedback data (position and velocity) is generated for each axis every millisecond and it is transferred to the servo calculator through the bank switched memory every millisecond by the servo control data manager through operation of the servo interrupt routine.

The servo calculator computes a torque command every millisecond for each axis from the command and feedback data. In turn, the torque commands are transferred every millisecond by the servo control data manager from the bank switched memory to the torque processor board. On the TP board, torque calculations based on torque commands and current feedback are performed to generate motor voltage commands for all axes every 250 microseconds.

## SWITCHING DATA TO THE SERVO CALCULATOR

After completion of the setup subroutine 472, block 484 performs whatever data transfer service is needed for the foreground/background interface within the servo control data manager 402.

## "MAILBOX" INTERFACE FOR 68K FOREGROUND/BACKGROUND TASKS

In order to effectively use the interrupt routines in the 68K it has become necessary to perform various asynchronous "setup" operations in the background task, while using the foreground task(s) to instantiate the changes. This approach allows the foreground tasks to have complete control of subordinate processors and devices. It also allows the less time critical setup to be spread out over several servo cycles. (In this discussion background refers to the non-interrupt task.)

A shared RAM mailbox interface was chosen to allow the background routine to communicate a list of tasks to be performed by the foreground routine. Each task request is encoded into a "packet" which contains the information required by the foreground task. The packet structure was designed to be simple yet as generic and efficient (in terms of decoding and execution costs) as possible. The following table describes the format of the interface:

```
Offset
(bytes)                           Contents
                         _____

    0               Semaphore byte (1=Full, 4=Empty)
    1               Number of Packets (requests)
  2-3        |  →   Command Field
  4-5  first |      Message size (number of 16-bit words)
  6-9  packet|      FROM Address Field
  a-d        |  →   TO Address Field
  e-15   Second packet (items 2-d from above)
 16-1d   Third packet
```

For the servo interrupt routine the elements in each packet are interpreted as follows (descriptions assume a single packet is presented):

Command Field (CF): CF > 0 : TMS 320 servo command

•Load CF into the TMS command list (see "TMS Ping-Pong Memory Map")
•copy "message size" words from "FROM" and append to the TMS input buffer.
•set semaphore byte to "empty"

25

CF = 0 : Transfer data command
　　　'copy "message size" words from "FROM" to "TO"
　　　'set semaphore byte to "empty"

CF = -9999 : TMS reset command (allows direct writes to TMS program memory)
　　　'disable (level 5 - VTICK) interrupts
　　　'put TMS into reset state
　　　'copy "message size" words from "FROM" and "TO"
　　　'remove reset state from TMS
　　　'set stick to bank 0
　　　'enable (level 5 - VTICK) interrupts
　　　'set sempahore byte to "empty"

CF < 0 : Multipass TMS 320 servo command
　　　'set CF = -CF
　　　'Load CF into the TMS command list
　　　'copy "message size" words from "FROM" and append to the TMS input buffer.
　　　'DO NOT set semaphore byte to "empty".

Notes:

　　　'In order to avoid time consuming packet management for multipass commands, ALL packets will be
　　　reprocessed on the second pass if ANY packet is of type Multipass.
　　　'Because resetting the TMS results in automatically switching to bank 0 (which may not be the bank
　　　earlier packets were stored in), the TMS bank memory is NOT switched if a TMS reset command is
　　　present. Therefore these commands should be sent separately.
　　　'Currently 300 (hex bytes of system resource RAM is set aside for the mailbox area and for free space
　　　to store the data. The following list of suggested global symbol names further defines the area.

List of Global Symbols FB__SHR 0x34900 .* shared ram base address to start of .* foreground/background
semaphore area *.'
FB__SEM 0x0000 + FB__SHR .* ptr to FB semaphore byte *.'
FB__NOP 0x0001 + FB__SHR .* ptr to number of packets (byte) *.'
FB__CF1 0x0002 + FB__SHR .* ptr to the first command field *.'
FB__MAX 0x0004 .* maximum number of packets allowed *.'
FB__DAT 0x0032 + FB__SHR .* ptr to area of free space to store data to .* be transferred to foreground
task *
FB__MXD 0x02ce .* maximum size of FB DAT in bytes *.'
FB__EMPTY 0x04 .* no command list *.'
FB__FULL 0x01 .* command list present *.'

　　　If block 485 detects that the servo calculator 404 is ready, block 486 transfers the previously prepared
position command and/or other data to the calculator 404 through the ping-pong memory. If the block 485
or block 487 finds that the servo calculator 404 is in a defective state, an error shutdown is commanded.
The following command list provides greater detail on the data transferred to the servo calculator.

Ping-Pong Memory Map

| Addresses | | | |
|---|---|---|---|
| 68k | TMS | Symbol | Contents |
| 3c000-3c007 | 0-7 | TMSCOM | TMS Command List |
| 3c010-3c09f | 8-4f | TMSIN | TMS Input Buffer |
| 3c0a0-3c0ff | 50-7f | TMSSTA | TMS Status Buffer |
| 3c100-3c11f | 80-8f | TMSTOR | TMS Torque Output Buffer |
| 3c120-3c21f | 90-10f | TMSLOG | TMS Logged Data Buffer |
| 3c220-3c7ff | 110-3ff | TMSGC | TMS General Communication Area |

Each of the buffers which comprise the 1k word ping-pong memory is described in detail below. The symbols shown in the table are simply suggested names to use for the start of each buffer to promote consistency between the 68k and TMS code. The buffers are organized such that the first two areas (TMSCOM and TMSIN) are read-only for the TMS (write-only for the 68k). The next three areas are write-only for the TMS and vise versa for the 68k. Whereas the final area (TMSGC) is a read/write area for both processors.

The TMS command list is simply a NULL command terminated list of task requests for the TMS to perform in a given cycle. Up to seven (7) commands can be included in a list. Each element is a 16-bit command used to direct the actions of the TMS. The preferred commands are as follows:

| Command | Action |
|---|---|
| 1 | Not currently used |
| 2 | Not currently used |
| 3 | Not currently used |
| 4 | Not currently used |
| 5 | Not currently used |
| 6 | Calibrate initial position and velocity |
| 7 | Calculate torque (execute servo with no cycle update) |
| 8 | Calculate torque (execute servo with cycle update) |
| 9 | Not currently used |
| a | Identify TMS servo parameters and version ID |

The TMS input buffer contains additional input data required by the TMS conditioned on the value of the command word and its relative location in the command list. Input data required by each command is stored sequentially in the same order as the commands in the command list. Currently this buffer has the following format if the command word = 8 (e.g., a cycle or "long" tick); note that the organization of this table is by 16-bit "short" word count.

TMSIN if absolute encoders and tachometers are used (e.g. 860/rx)

| Word | Contents |
|------|----------|
| 0 | Time stamp |
| 1 | Servo enable mask |
| 2 | Velocity scale factor |
| 3 | High word of position command for joint 1 |
| 4 | Low word of position command for joint 1 |
| 5 | Absolute encoder measurement for joint 1 |
| 6 | Absolute velocity measurement for joint 1 |
| 7-10 | Words 3-6 for joint 2 |
| 11-14 | Words 3-6 for joint 3 |
| 15-18 | Words 3-6 for joint 4 |
| 19-22 | Words 3-6 for joint 5 |
| 23-26 | Words 3-6 for joint 6 |

If the command word = 7 (e.g., a non-cycle or "short" tick) the TMS input buffer assumes the following form:

| Word | Contents |
|------|----------|
| 0 | Time stamp |
| 1 | Servo enable mask |
| 2 | Absolute encoder measurement for joint 1 |
| 3 | Absolute velocity measurement for joint 1 |
| 4-5 | Words 2-3 for joint 2 |
| 6-7 | Words 2-3 for joint 3 |
| 8-9 | Words 2-3 for joint 4 |
| 10-11 | Words 2-3 for joint 5 |
| 12-13 | Words 2-3 for joint 6 |

TMSIN for command = 8 if ONLY incremental encoders are used (e.g., Puma line)

| Word | Contents |
|------|----------|
| 0 | Time stamp |
| 1 | Index interrupt/servo enable mask |
| 2 | Carry (wrap) for position feedback |
| 3 | Velocity scale factor (1608 format) |
| 4 | High word of position command for joint 1 (in 3208 form) |
| 5 | Low word of position command for joint 1 |
| 6 | Encoder count/index for joint 1· |
| 7-9 | Words 4-6 for joint 2 |
| 10-12 | Words 4-6 for joint 3 |
| 13-15 | Words 4-6 for joint 4 |
| 16-18 | Words 4-6 for joint 5 |
| 19-21 | Words 4-6 for joint 6 |

If the command word = 7 (e.g., a non-cycle or "short" tick) the TMS input buffer assumes the following form when using incremental encoders:

| Word | Contents |
|------|----------|
| 0 | Time stamp |
| 1 | Index interrupt/servo enable mask |
| 2 | Encoder count/index for joint 1 |
| 3 | Encoder count/index for joint 2 |
| 4 | Encoder count/index for joint 3 |
| 5 | Encoder count/index for joint 4 |
| 6 | Encoder count/index for joint 5 |
| 7 | Encoder count/index for joint 6 |

TMSIN for command = 8 if absolute resolvers are used (e.g., 100 robot)

| Word | Contents |
|------|----------|
| 0 | Time stamp |
| 1 | Servo enable mask |
| 2 | Velocity scale factor |
| 3 | High word of position command for joint 1 |
| 4 | Low word of position command for joint 2 |
| 5 | Absolute resolver measurement for joint 1 |
| 6-8 | Words 3-5 for joint 2 |
| 9-11 | Words 3-5 for joint 3 |
| 12-14 | Words 3-5 for joint 4 |
| 15-17 | Words 3-5 for joint 5 |
| 18-20 | Words 3-5 for joint 6 |

If the command word = 7 (e.g., a non-cycle or "short" tick) the TMS input buffer assumes the following form:

| Word | Contents |
|------|----------|
| 0 | Time stamp |
| 1 | Servo enable mask |
| 2 | Absolute resolver measurement for joint 1 |
| 3 | Absolute resolver measurement for joint 2 |
| 4 | Absolute resolver measurement for joint 3 |
| 5 | Absolute resolver measurement for joint 4 |
| 6 | Absolute resolver measurement for joint 5 |
| 7 | Absolute resolver measurement for joint 6 |

If the command word = 6 (e.g., a calibration command) the TMS input buffer is:

29

| Word | Contents |
|------|----------|
| 0 | Time stamp |
| 1 | Absolute position in encoder bits (3208) for joint 1 |
| 2 | Absolute position in encoder bits (3208) for joint 2 |
| 3 | Absolute position in encoder bits (3208) for joint 3 |
| 4 | Absolute position in encoder bits (3208) for joint 4 |
| 5 | Absolute position in encoder bits (3208) for joint 5 |
| 6 | Absolute position in encoder bits (3208) for joint 6 |

If the command word = A (e.g., ID command), no inputs are required in the TMS input buffer.

The purpose of the TMS status buffer is to provide an area where any process can look to find out the current position/velocity of the arm. As such this buffer is ordered as follows:

| Word | Contents |
|------|----------|
| 0 | Time stamp (future) |
| 1 | Enable/disable bit mask |
| 2 | Limp status bit mask |
| 3 | Brake status bit mask |
| 4 | PFB, Position of joint 1 in encoder bits in 3208 form (high word) |
| 5 | PFB, Position of joint 1 in encoder bits (low word) |
| 6 | VFINO, Velocity of joint 1 in encoder bits/ servo-tick in 1608 form |
| 7-9 | 4-6 for joint 2 |
| 10-12 | 4-6 for joint 3 |
| 13-15 | 4-6 for joint 4 |
| 16-18 | 4-6 for joint 5 |
| 19-21 | 4-6 for joint 6 |
| 22 | Status (error/no error/command error) |
| 23 | Servo coincidence word (fine/course) |
| 24-25 | Error status (hi and low) |
| 26 | Input task bit mask (hi byte)/completion status bit mask (low byte) |

The torque output buffer contains the torques to be applied over the next servo tick. The torques are formatted such that the 68k can simply copy them directly to the appropriate device (DAC-TP board) without modification. This buffer is simply organized as:

| Word | Contents |
|------|----------|
| 0 | Torque output for joint 1 |
| 1 | Torque output for joint 2 |
| 2 | Torque output for joint 3 |
| 3 | Torque output for joint 4 |
| 4 | Torque output for joint 5 |
| 5 | Torque output for joint 6 |

The logged data buffer currently is composed of the following items all recorded at the servo sample rate:

```
Word           Contents

    0    Joint 1 PCT, Position command in 3208 form (high word)
    1.   Joint 1 PCT, Position command (low word) (bits)
    2    Joint 1 VCT, Velocity command in 1608 form (B/tick)
    3    Joint 1 VFBF, Filtered velocity feedback in 1608 form (B/tick)
    4    Joint 1 Position error in 1605 form (bits)
    5    Joint 1 Integration error in 32016 form (high word)
    6    Joint 1 Integration error (low word)
    7    Joint 1 Velocity error in 1608 form (B/tick)
    8    Joint 1 DVHATC Accel command in 1608 (B/tick/tick)
    9    Joint 1 SUM, Intermediate signal sum in 1600 form
 10-18   0-8 for joint 2
 19-27   0-8 for joint 3
 28-36   0-8 for joint 4
 37-45   0-8 for joint 5
 46-54   0-8 for joint 6
```

The General Communication area is used as a general read/write area for passing information to and from the servo calculator.

Next. block 488 determines whether the torque processor board 600 is ready for data transfer and if not an error shutdown is commanded. Normally, however, the TP board 600 would be ready and block 489 transfers torque command and/or other data to the TP board 600. Other data may include servo gains and correct gains for the particular robot being controlled, all of which would be downloaded during step-up time. Blocks 490 and 491 then perform synchronous and one-shot data logging routines. The one-shot data logger 491 is flagged for operation by various routines when an error occurs.

SCM Data Logger Mechanisms

Both data loggers 490 and 491 shown in Figures 11G and 11H, respectively, are controlled by a shared RAM "mailbox" interface. In addition, both are invoked in the servo interrupt routine immediately following the execution of the servo code. Therefore, the fastest rate at which data can be logged is dictated by the servo update rate employed (currently this is 1 ms). In the case of the one-shot data logger, it can also be invoked via a subroutine call (JSR logone). This is provided so that conditions present during unexpected errors can be recorded immediately (for example, prior to an emergency shutdown).

The shared RAM interface for the synchronous data logger is organized as follows (where all addresses are specified as offsets from a base address):

```
Offset          Size          Contents

     0       8 bits        Semaphore (1 = > log data)
   1-3       24 bits       Not used
   4-5       16 bits       Starting tick counter
   6-7       16 bits       Not used
   8-9       16 bits       Ending tick counter
   a-b       16 bits       Not used
   c-f       32 bits       Pointer to list of addresses
                           to log (32 bit data transfers)
  10-13      32 bits       Pointer to area in memory for
                           SCM to deposit logged data
```

Note: The areas which are not used in the above map will be eliminated in the future. They exist only because the original interface exclusively used long word quantities.

The shared RAM interface for the asynchronous one-shot data logger is organized as follows (where all addresses are specified as offsets from a base address):

| Offset | Size | Contents |
|--------|------|----------|
| 0 | 8 bits | One-shot trigger (1 = log, reset to 0) |
| 1 | 8 bits | Not used |
| 2-3 | 16 bits | Total event counter |

In the servo calculator, two basic functions are performed. First, downloaded position command data is interpolated for each of the 31 ticks between long ticks in the VALCYCLE, and velocity and acceleration command data are computed from the position command data for each tick. Next, servo calculations are made for each axis after each tick for the position, velocity and acceleration commands then applicable and the concurrently received position and velocity feedback. As a result, a torque command is computed for each axis after every tick for execution by the torque processor board. The control algorithm executed by the servo calculator is shown in greater detail in Figure 3.

## POSITION/VELOCITY FEEDBACK CONTROL LOOP OPERATION

In Figure 13, there is shown a simplified block diagram schematic of the control loop configuration embodiment depicted in Figure 3 in which the invention is embodied. Summarizing, robot commands are generated for each axis by a position command program 128 and applied to a servo control (SCM) computer 118 where position and velocity control is performed. The SCM computer 118 in turn generates a current or torque command which is applied as a setpoint to a TP computer designated by reference numerals 168 and 172 (see Figure 3). A voltage command is applied to a digital pulse width modulator (PWM) circuit from the TP computer 172. Switch control signals are applied by the PWM to a power amplifier 174 to control the operation of a DC axis motor in the robot. Closed loop control is enabled by a current feedback functional block. The details on the structure and operation of the software and circuitry for the configuration of Figure 13 has already been set forth in the above description.

In accordance with another aspect of the invention, position and velocity feedback signals are provided from each axis motor through an incremental position feedback sensor 810 and a position and velocity processor 812 to the SCM computer(s) 118. This aspect of the present invention will be described in greater detail herebelow.

## INCREMENTAL POSITION FEEDBACK PROCESSOR

A block diagram is shown in Figure 14 for circuitry 812 employed to process position encoder feedback and enable robot control to be provided in accordance with the present invention. Encoder interfacing is achieved with improved functionality and greater cost effectiveness through reduced circuitry requirements with use of the present invention.

A command register 814 is included in the circuit 812 to enable a higher level microprocessor to read/write with respect to the circuit 812. As shown, the microprocessor interface signals are as follows:

| Name | Function |
|------|----------|
| A0-A3 | Address Lines |
| CSb | Chip Select |
| RD | Read |
| DSb | Data Strobe |
| DTACKb | Data Acknowledge |

A sample and time base circuit 816 responds to AIF board signals SAMP and CLOCK to provide cycle reference and time reference signals for registers in the circuit 812. Input and output data bus buffers 818 and 820 provide a data interface for the circuit registers with the VME data bus under microprocessor control. An interrupt status register 822 responds to encoder decode signals and command register signals to generate an interrupt on each index count.

Each circuit 812 is organized to process the position feedback encoder signals for three of the six robot axes. Thus, three channels 824, 826 and 828 are provided for decoding and registering position and velocity related data. As shown, each channel includes decode circuitry 830 and data bus interface circuitry 832. Each channel also includes an incremental count register 834 for position counting, an index register 836 for recording encoder index signals, and first and last time registers 838 and 840 employed in the computation of velocity. The output signal INDXF is a logic AND combination of the encoder index signal and the two encoder phase signals. Each channel 830 further includes a data bus interface 842 which is coupled to the interrupt status register 822 and input and output data bus buffers 818 and 820, respectively.

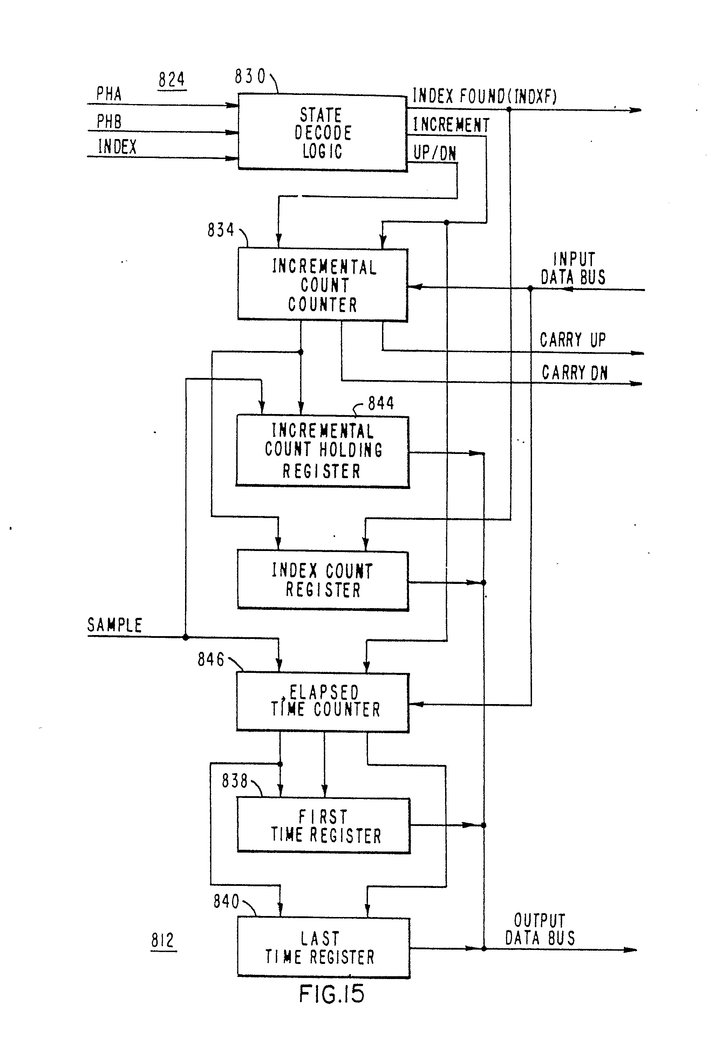

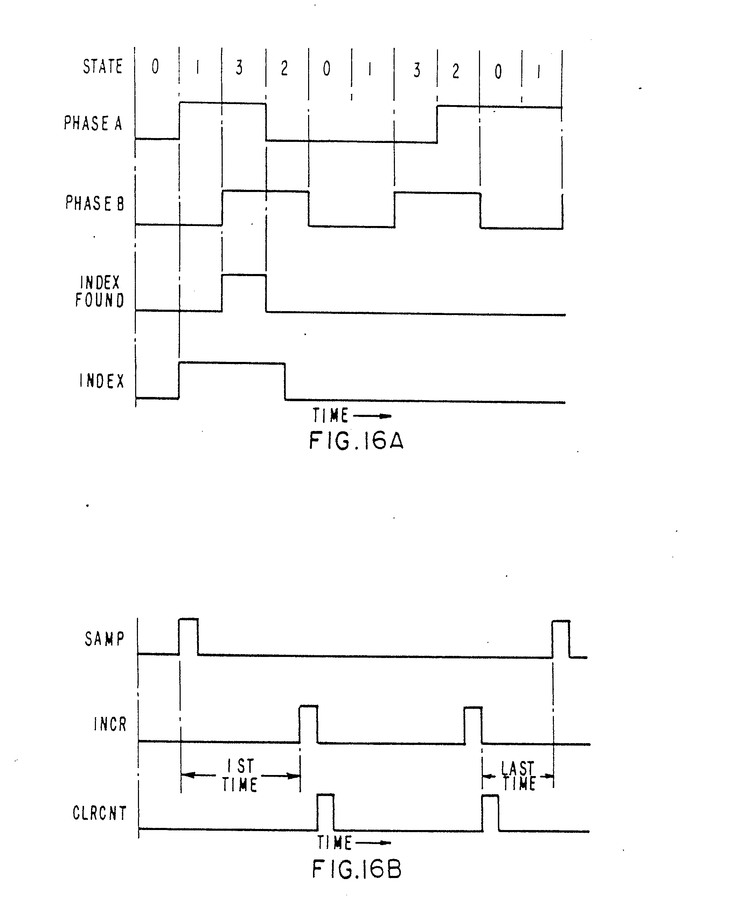

As shown in greater detail for the channel 824 in Figure 15, the decode circuitry 830 is a logic circuit which operates on the three encoder signals PHA, PHB and INDEX to generate the signal INDXF when all three signals coexist·(see Figure 16A) and to generate a direction signal UP/DN and position change or INCREMENT signals for the incremental counter 834. Figure 16A shows the relationship of the encoder signals and the four states which are decoded by the decode circuitry 830.

INDEX occurs once each encoder revolution. Thus, the actual number of counts is compared to the known number of counts per revolution when INDEX occurs. An incorrect number of counts would indicate an error caused for example by noises.

Storing CARRY UP and CARRY DOWN effectively doubles the length of the register 834, i.e., the size of the accumulatable count. HOLDING REGISTER 844 provides a checking capability to verify the number of INCREMENT counts per revolution.

If the motor speed is so low that only one or two or fewer position change counts are generated each sample period, significant loss occurs in conventional feedback schemes in the accuracy with which velocity can be computed by dividing position change by elapsed time.

With the present invention, improvement is realized through the provision of a capability for determining velocity from position change data with higher resolution at low velocities than has heretofore been achieved. Generally, a measurement is made of the time that occurs between the occurrence of decoded position change pulses. An elapsed time counter 846 generates a cyclic time count under the control of the signal SAMP and detects elapsed time for the generation of the INCREMENT signals.

The first time register 828 records the elapsed time from the beginning of a sample interval to the occurrence of the next INCREMENT pulse. The last time register 840 records the elapsed time between the occurrence of the last INCREMENT pulse in the sample interval to the end of the sample interval.

First and last elapsed time signals are transferred to the microprocessor 814 for calculation of velocity accurately reflecting the actual low motor velocity. As indicated by block 848 in the velocity feedback calculation flow chart in Figure 17 and as illustrated in detail in Figure 16B, the velocity calculation is made on the basis of the inverse time concept; i.e., velocity is computed using the following algorithm:

VELOCITY = 1/TIME

For higher velocities, the microprocessor calculates velocity as indicated by block 850 by dividing the position change (number of INCREMENT pulses) by the elapsed time (number of cycles). The microprocessor crosses between low and high velocity algorithms as the motor velocity rises or drops, because the low velocity algorithm becomes less accurate as the motor velocity increases with increasing numbers of INCREMENT pulses generated in each sample time period generated in any one sample period. The crossover is performed in select block 852, where for example the high velocity algorithm is selected if the INCREMENT count rate is three or more per sample time period.

The circuit 812 is preferably embodied in an LSI chip as indicated by dotted box 813. Thus, the chip 812 is specially designed from a standard Large Scale Integrated (LSI) gate array chip in which a multitude of isolated transistors are formed by a silicon mask deposit within a semiconductor wafer. In this case, circuitry is specifically implemented in a CMOS 3 micron, single metal, 1500 gate array chip. The desired circuit design is produced on the position/velocity feedback (PVF) chip by disposing a customizing metal mask on the chip to interconnect the transistor gates in a predetermined pattern which produces the desired circuitry. One PVF chip may be used for each set of three robot axes. Thus, in the present case two PVF chips are employed on the AIF board which is arranged to operate with the Unimation 700 series robots, i.e., with robots having incremental position feedback and employing DC brush type joint motors.

Claims

1. A robot [Figure 1, 20] comprising:

an arm having a plurality of joints (21-26);

each of said joints having an electric motor drive [Figure 3, 102; Figure 7B1];

a power amplifier [Figure 3, 174; Figure 7B1] operable to supply drive current to each motor;

respective feedback control loop means [Figure 3, Figure 7B1] for respectively controlling said power amplifiers for said joint motors;

each of said feedback control loop means including at least digital position and velocity control loops [Figure 3, 118] operable to control the associated power amplifier;

at least first servo control means [Figure 5] for performing control support tasks and calculation tasks for at least one of said control loops for all of the joint motors;

and characterized by:

said first servo control means including a first microprocessor [Figure 5, 204] for performing calculation tasks including computing output control commands from stored algorithms for said one control loop for each joint motor;

said first microprocessor having a relatively high computing performance capability and a relatively low data processing interface capability;

said first servo control means further including a second microprocessor [Figure 5, 202] for supervising the operation of said first servo control means and performing servo control support tasks in said one control loop for each joint motor including the routing of control command, status and feedback data to and from said first microprocessor;

said second microprocessor having a relatively high data processing performance capability; and

means for interfacing [Figure 5, 206, 208] said first and second microprocessors relative to each other and relative to higher (210) and lower (212) level control circuitry so as to enable said first servo control means to operate said one control loop for each joint motor and control the controlled variable for said one control loop.

2. A robot as set forth in claim 1 wherein said first servo control means performs tasks for both said position and said velocity control loops [Figure 10-1, -2] with said first microprocessor (404) performing calculation tasks for both loops and said second microprocessor (402) performing control support tasks for both loops.

3. A robot as set forth in claim I wherein said lower level circuitry includes respective torque control circuitry [Figure 3, 172; Figure 4, 600; Figure 6] for generating motor voltage commands (164) for coupling to said power amplifiers (174); and including:

means for generating position commands [Figure 3, 128; Figure 4, 500] for implementation by said second microprocessor;

means [Figure 3, 140-150] for detecting motor position and velocity for each axis and for generating corresponding digital feedback signals;

means [Figure 11A, 452] for operating said second microprocessor to control said interfacing means so as to send position commands to said first microprocessor and receive calculated torque commands from said first microprocessor; and

means [Figure 11A, 489-491] for operating said second microprocessor to apply the torque commands to said torque control circuitry for execution and to receive said motor current feedback signals.

4. A robot as set forth in claim 1 wherein said second microprocessor operating means includes servo program means and main program means [Figure 11B];

said servo program means (452) being executed cyclically at the digital control sampling rate (VTICK) and implementing a plurality of functions including directing the routing of torque commands from said interfacing means to said torque control circuitry and directing the routing of motor feedback signals to said interfacing means and said first microprocessor from said digital generating means;

said main program means [Figure 11E, 450, 456] operating on startup to initialize position/velocity servo control microprocessor operation and operating to receive position commands and direct them to said interfacing means for said first microprocessor.

5. A robot as set forth in claim 4 wherein the interrupt program execution rate is at least as fast as once every 250 microseconds [Figure 12-2] and the robot has at least six axes.

6. A robot as set forth in claim 1 wherein:

said feedback control loop means for each joint motor further includes a torque control loop [Figure 3, 168, 170] with a forward path output (166) from said position and velocity control loops providing a motor current setpoint (168) for torque control;

34

second servo control means [Figure 6-1, -2] are provided for performing control support tasks and calculation tasks for said torque control loop for each joint motor;

said second servo control means including a third microprocessor (610) for performing calculation tasks including computing output control commands from stored algorithms for said torque control loop for each joint motor;

said third microprocessor having a relatively high computing performance capability and a relatively low data processing interface capability;

said second servo control means further including a fourth microprocessor (602) for supervising the operation of said second servo control means and performing servo control support tasks in said torque control loop for each joint motor including the routing of control command, status and feedback data to and from said third microprocessor; and

means for interfacing (608, 604) said third and fourth microprocessors relative to each other and relative to higher [Figure 4, 400] and lower [Figure 4, 800] level control circuitry so as to enable said second servo control means to operate said torque control loop and control the torque for each joint motor.

7. A robot as set forth in claim 6 wherein said first servo control means performs tasks for both said position and said velocity control loops with said first microprocessor performing calculation tasks for both loops and said second microprocessor performing control support tasks for both loops.

8. A robot as set forth in claim 6 wherein said lower level circuitry relative to the third and fourth microprocessors includes respective digital pulse width modulating means [Figure 7B1, PWM chip] for generating joint motor control signals for application to said power amplifiers for the respective robot axes; and including:

means for sensing motor current [Figure 7B1, $R_s$, $K_{if}$] for each axis and for generating corresponding digital current feedback signals [Figure 7B1, A/D];

means [Figure 6, 604, 606; Figure 4, VME BUS 155] for coupling said fourth microprocessor to higher level control looping to receive torque commands for execution and to send status data;

means [Figure 8A] for operating said fourth microprocessor to control said corresponding interfacing means so as to send torque commands to said third microprocessor and receive calculated voltage commands from said third microprocessor; and

means [Figure 8A; Figure 6, VMX BUS 607; Figure 4, 156] for operating said fourth microprocessor to apply the voltage commands to said pulse width modulating means for execution and to receive said motor current feedback signals.

9. A robot as set forth in claim 6 wherein said fourth microprocessor operating means includes interrupt program means and main program means [Figure 8B];

said interrupt program means [Figure 8B, 620] being executed cyclically at the digital control sampling rate and implementing a plurality of functions including directing the routing of voltage commands from said corresponding interfacing means to said pulse width modulating means and directing the routing of motor current feedback signals to said interfacing means and said third microprocessor from said digital generating means;

said main program means [Figure 8D, 618] operating on start-up to initialize torque servo control microprocessor operation and thereafter operating in a wait command mode (624) to manage execution of high priority commands received from the next higher control level.

10. A robot as set forth in claim 9 wherein said high priority commands [Figure 8C] include diagnostic and parameter change commands.

11. A robot as set forth in claim 9 wherein the interrupt program execution rate [Figure 12-2] is at least as fast as once every 250 microseconds and the robot has at least six axes.

12. A robot as set forth in claim 1 including:

encoder means [Figure 13, 810] for generating a plurality of signals representing motor position changes;

a digital feedback system (812) responsive to said encoder means to provide position and velocity feedback signals for said feedback control means at the predetermined sampling rate;

said feedback system including circuit means [Figure 14, 824] having means [Figure 15, 834] responsive to said encoder means signals to accumulate a count of increment pulses representing incremental changes in position and operating as said position feedback signal for said feedback control means;

said circuit means further having means [Figure 15, 846; Figure 17, 848] for detecting the elapsed time between successive increment pulses and for computing velocity from the elapsed time and generating said velocity feedback signal for said feedback control means.

13. A robot as set forth in claim 12 wherein means [Figure 17, 850] are provided for computing velocity from the number of increment pulses generated over a reference time period and means (852) are provided for selecting one of the two computed velocities for use as said velocity feedback signal.

14. A robot as set forth in claim 13 wherein the velocity selection is based on the rate of increment pulse generation with the elapsed time velocity selected for lower velocities and the increment pulse velocity selected for higher velocities.

15. A robot a set forth in claim 1 wherein:

said feedback control loop means for each joint motor further includes a torque control loop with a forward path output (166) from said position and velocity control loops providing a motor current setpoint (168) for torque control; and

said first servo control means performs control support tasks and calculation tasks for at least one of said position and velocity and torque control loops.

16. A robot as set forth in claim 15 wherein said robot has at least six motor operated joints [Figure 1].

17. A digital control [Figure 3] for a robot [Figure 1, 20] having a plurality of arm joints (21-26) each driven by an electric motor [Figure 7B1], said control comprising:

a power amplifier (174) operable to supply drive current to each motor;

respective feedback control loop means [Figure 3; Figure 7B1] for respectively controlling said power amplifiers for said joint motors;

each of said feedback control loop means including at least digital position and velocity control loops [Figure 3, 118] operable to control the associated power amplifier;

at least first servo control means [Figure 5] for performing control support tasks and calculation tasks for at least one of said control loops for all of the joint motors;

and characterized by:

said first servo control means including a first microprocessor [Figure 5, 204] for performing calculation tasks including computing output control commands from stored algorithms for said one control loop for each joint motor;

said first microprocessor having a relatively high computing performance capability and a relatively low data processing interface capability;

said first servo control means further including a second microprocessor [Figure 5, 202] for supervising the operation of said first servo control means and performing servo control support tasks in said one control loop for each joint motor including the routing of control command, status and feedback data to and from said first microprocessor; and

means for interfacing [Figure 5, 206, 208] said first and second microprocessors relative to each other and relative to higher (210) and lower (212) level control circuitry so as to enable said first servo control means to operate said one control loop for each joint motor and control the controlled variable for said one control loop.

18. A digital control for a robot as set forth in claim 17 wherein said first servo control means performs tasks for both said position and said velocity control loops with said first microprocessor performing calculation tasks for both loops and said second microprocessor performing control support tasks for both loops.

19. A digital control for a robot as set forth in claim 17 wherein said lower level circuitry including respective torque control circuitry [Figure 3, 172; Figure 4, 600; Figure 6] for generating motor voltage commands (164) for coupling to said power amplifiers (174); and including:

means for generating position commands [Figure 3, 128; Figure 4, 500] for implementation by said second microprocessor;

means [Figure 3, 140-150] for detecting motor position and velocity for each axis and for generating corresponding digital feedback signals;

means [Figure 11A, 452] for operating said second microprocessor to control said interfacing means so as to send position commands to said first microprocessor and receive calculated torque commands from said first microprocessor; and

means [Figure 11A, 489-491] for operating said second microprocessor to apply the torque commands to said torque control circuitry for execution and to receive said motor current feedback signals.

20. A digital robot control as set forth in claim 17 wherein said second microprocessor operating means includes servo program means and main program means [Figure 11B];

said servo program means (452) being executed cyclically at the digital control sampling rate (VTICK) and implementing a plurality of functions including directing the routing of torque commands from said interfacing means to said torque control circuitry and directing the routing of motor feedback signals to said interfacing means and said first microprocessor from said digital generating means;

36

said main program means [Figure 11E, 450, 456] operating on startup to initialize position/velocity servo control microprocessor operation and operating to receive position commands and direct them to said interfacing means for said first microprocessor.

21. A digital robot control as set forth in claim 20 wherein the interrupt program execution rate is at least as fast as once every 250 microseconds [Figure 12-2] and the robot has at least six axes.

22. A digital control for a robot as set forth in claim 17 wherein:

said feedback control loop means for each joint motor further includes a torque control loop [Figure 3, 168, 170] with a forward path output (166) from said position and velocity control loops providing a motor current setpoint (168) for torque control;

second servo control means [Figure 6] are provided for performing control support tasks and calculation tasks for said torque control loop for each joint motor;

said second servo control means including a third microprocessor (610) for performing calculation tasks including computing output control commands from stored algorithms for said torque control loop for each joint motor;

said third microprocessor having a relatively high computing performance capability and a relatively low data processing interface capability;

said second servo control means further including a fourth microprocessor (602) for supervising the operation of said second servo control means and performing servo control support tasks in said torque control loop for each joint motor including the routing of control command, status and feedback data to and from said third microprocessor; and

means for interfacing (604, 608) said third and fourth microprocessors relative to each other and relative to higher [Figure 4, 400] and lower [Figure 4, 800] level control circuitry so as to enable said second servo control means to operate said torque control loop and control the torque for each joint motor.

23. A digital control for a robot as set forth in claim 22 wherein said first servo control means performs tasks for both said position and said velocity control loops with said first microprocessor performing calculation tasks for both loops and said second microprocessor performing control support tasks for both loops.

24. A digital control for a robot as set forth in claim 17 wherein said lower level circuitry relative to the third and fourth microprocessors includes respective digital pulse width modulating means [Figure 7B1, PWM Chip] for generating joint motor control signals for application to said power amplifiers for the respective robot axes; and including:

means for sensing motor current [Figure 7B1, $R_s$, $K_{if}$] for each axis and for generating (A/D) corresponding digital current feedback signals;

means [Figure 6A, 604, 606; Figure 4, VME bus 155] for coupling said fourth microprocessor to higher level control looping to receive torque commands for execution and to send status data;

means [Figure 8A] for operating said fourth microprocessor to control said corresponding interfacing means so as to send torque commands to said third microprocessor and receive calculated voltage commands from said third microprocessor; and

means [Figure 8A, Figure 6, VMX BUS 607; Figure 4, 156] for operating said fourth microprocessor to apply the voltage commands to said pulse width modulating means for execution and to receive said motor current feedback signals.

25. A digital robot control as set forth in claim 17 wherein said fourth microprocessor operating means includes interrupt program means and main program means [Figure 8B];

said interrupt program means [Figure 8B, 620] being executed cyclically at the digital control sampling rate and implementing a plurality of functions including directing the routing of voltage commands from said corresponding interfacing means to said pulse width modulating means and directing the routing of motor current feedback signals to said interfacing means and said third microprocessor from said digital generating means;

said main program means [Figure 8D, 618] operating on startup to initialize torque servo control microprocessor operation and thereafter operating in a wait command mode (624) to manage execution of high priority commands received from the next higher control level.

26. A digital robot control as set forth in claim 25 wherein said high priority commands [Figure 8C] include diagnostic and parameter change commands.

27. A digital robot control as set forth in claim 25 wherein the interrupt program execution rate is at least as fast as once every 250 microseconds [Figure 12-2] and the robot has at least six axes.

28. A digital robot control as set forth in claim 17 including:

encoder means [Figure 13, 810] for generating a plurality of signals representing motor position changes;

a digital feedback system (812) responsive to said encoder means to provide position and velocity feedback signals for said feedback control means at the predetermined sampling rate;

said feedback system including circuit means [Figure 14, 824] having means [Figure 15, 834] responsive to said encoder means signals to accumulate a count of increment pulses representing incremental changes in position and operating as said position feedback signal for said feedback control means;

said circuit means further having means [Figure 15, 846; Figure 17, 848] for detecting the elapsed time between successive increment pulses and for computing velocity from the elapsed time and generating said velocity feedback signal for said feedback control means.

29. A robot control as set forth in claim 28 wherein means [Figure 17, 850] are provided for computing velocity from the number of increment pulses generated over a reference time period and means (852) are provided for selecting one of the two computed velocities for use as said velocity feedback signal.

30. A robot control as set forth in claim 29 wherein the velocity selection is based on the rate of increment pulse generation with the elapsed time velocity selected for lower velocities and the increment pulse velocity selected for higher velocities.

31. A digital position and velocity feedback system [Figure 13] for a digital control for a robot [Figure 1] having a plurality of arm joints (21-26), said system comprising:

an electric motor for driving each of the robot arm joints in accordance with operation of the digital control;

encoder means (810) for generating a plurality of signals [Figure 12, PHA, PHB, INDEX] representing motor position changes; and characterized by:

circuit means (812) responsive to said encoder means signals to accumulate a count of increment pulses representing incremental changes in position and operating as a position feedback signal;

said circuit means further having means [Figure 15, 846] for detecting the elapsed time between successive increment pulses and for computing velocity from the elapsed time [Figure 17, 848] and generating a velocity feedback signal.

32. A system as set forth in claim 31 wherein means [Figure 17, 850] are provided for computing velocity from the number of increment pulses generated over a reference time period and means (852) are provided for selecting one of the two computed velocities for use as said velocity feedback signal.

33. A system as set forth in claim 32 wherein the velocity selection is based on the rate of increment pulse generation with the elapsed time velocity selected for lower velocities and the increment pulse velocity selected for higher velocities.

34. A system as set forth in claim 31 wherein a large scale integrated gate array chip [Figure 14, 813] is structured to embody said circuit means.

35. A system as set forth in claim 31 wherein:

said circuit means further having means [Figure 14, 816] for cyclically generating a sample pulse synchronized to the predetermined sampling rate of said position and velocity control loops;

means [Figure 15, 838] for detecting the time elapsed from the sample pulse marking the beginning of each sample period to the beginning of the first increment pulse in that sample period;

means (840) for detecting the time elapsed from the end of the last increment pulse in each sample period to the sample pulse marking the end of that sample period; and

means (846) for computing velocity from the elapsed time between successive last and first increment pulses and for generating said velocity feedback signal for said feedback control means.

36. A system as set forth in claim 35 wherein a large scale integrated gate array chip (813) is structured to embody said circuit means.

FIG. 1

FIG. 2

0 269 372

FIG. 3

FIG. 4

210

CONTROL
CIRCUITRY
(HIGHER LEVEL)

208

I/O
DATA

212

CONTROL
CIRCUITRY
(LOWER LEVEL)

202

MULTI-AXIS
ROBOT
CONTROL
SUPERVISOR

206

BANK
SWITCH
MEMORY

204

MULTI-AXIS
DIGITAL
SIGNAL
PROCESSOR

200

FIG.5

FIG.6-1

FIG. 6-2

# FIG. 7A-I

SUB FBVG860 JOINTS 2,3
SUB FBFG FOR ALL OTHER JOINTS

VELOCITY CONVERSION FACTOR FOR PBVG860

FIG. 7A-2

FIG. 7A-3

0 269 372

FIG. 7B-1

$\dfrac{2^{10}}{2^{16}}$

TORQUE COMMAND → $\dfrac{2^{10}}{2^{16}}$ → $\Sigma$ → KP, KI, $\dfrac{1}{S}$ → $\Sigma$ → LINEARIZER

SOFTWARE | HARDWARE

PWM CHIP → POWER AMP → MOTOR → $I_f$, $R_s$

$\dfrac{2^{15} \text{ BITS}^*}{5V}$

10 BIT A/D
*LEFT JUSTIFIED

$0.02\,\Omega$
$0.04\,\Omega$
$0.05\,\Omega$

$\approx 2^{10}$ BITS/A (JTI)

OFFSET

A/D* ← $K_{if}$ ← $R_s$

| $R_s$ | | JTI,2,3 | JT4 | JT5,6 |
|---|---|---|---|---|
| | | 0.02 | 0.04 | 0.05 |
| $K_{if}$ | 6.8 | 0 124V/A<br>≈ >40 32A/5V | 0 248V/A<br>≈ >20 16A/5V | 0 310V/A<br>≈ >16 13A/5V |

FIG. 7B-2

0 269 372

FIG.8A-I

```
      ╭─────────╮
      │   PWM   │ ╭670
      │  IREQ   │
      ╰────┬────╯
           │
      ┌────┴────┐ ╭672
      │   DI    │
      └────┬────┘
           │
           ▼
        ╱ 673 ╲
      ╱  MSEN   ╲──N──────────────┐
      ╲         ╱                  │
        ╲     ╱                    ▼
          │Y                  ┌─────────┐ ╭678
          ▼                   │ PWMSW   │
      ┌────────┐ ╭674         │  DI     │
      │  SVEN  │              └────┬────┘
      └────┬───┘                   │
           │                       ▼
           ▼                  ┌─────────┐ ╭679
      ┌────────┐ ╭675         │ PWMCLR  │
      │ ADSET  │              └────┬────┘
      └────┬───┘                   │
           │                       ▼
           ▼                  ┌─────────┐ ╭680
      ┌────────┐ ╭676         │ CLRSV   │
      │  CMND  │              └────┬────┘
      │  CK    │                   │
      └────┬───┘                   ▼
           │                     ╭───╮ ╭681
           ▼                     │ C │
      ┌────────┐ ╭677            ╰─┬─╯
      │ COPY   │                   │
      │ CMMTN  │                   ▼
      └────┬───┘                 ╱682╲        ┌────────┐ ╭683     ┌──────┐
           │                   ╱ ERRCD ╲──Y──▶│ SHUT   │────────▶│ ERR  │
           ▼                   ╲  SET   ╱      │ DWN    │         └──────┘
         ╭───╮                   ╲    ╱        └────────┘
         │ E │                     │N
         ╰───╯                     ▼
                                 ╱684╲         ┌─────────┐ ╭685
                               ╱ TTICK=3╲──Y──▶│  RST    │
                               ╲        ╱      │ TTICK=0 │
                                 ╲    ╱        └────┬────┘
                                   │N                │
                                   ▼                 │
                              ┌─────────┐ ╭686        │
                              │ INCR    │             │
                              │ TTICK   │             │
                              └────┬────┘             │
                                   │                  │
                                   ▼                  │
                              ┌─────────┐ ╭687         │
                              │ CMND    │             │
                              │ STR     │             │
                              └────┬────┘             │
                                   │◀─────────────────┘
                                   ▼
                              ┌─────────┐
                              │ · EI    │
                              └─────────┘
```

# FIG.8A-2

FIG.8 A-3

FIG.8A-4

FIG. 8B

FIG.8C

0 269 372

FIG.8D

```
618 ─┐
   ┌──────────┐
   │  ENTER   │
   │ MAIN PGM │
   └──────────┘
        │
622 ─┐  ▼
   ┌──────────┐
   │  RESET   │
   └──────────┘
        │
630 ─┐  ▼
   ┌──────────┐
   │  CHECK-  │
   │   RAM    │
   └──────────┘
        │
632 ─┐  ▼
   ┌──────────┐
   │  TCALCDB │
   └──────────┘
        │
634 ─┐  ▼
   ┌──────────┐
   │  ACTTMS  │
   └──────────┘
        │
636 ─┐  ▼
   ┌──────────┐
   │ COPYTMS  │
   │   OFF    │
   └──────────┘
        │
638 ─┐  ▼
   ┌──────────┐
   │ LOADTMS  │
   └──────────┘
        │
640 ─┐  ▼
   ┌──────────┐
   │ COPYTMS  │
   │   ON     │
   └──────────┘
        │
642 ─┐  ▼
   ┌──────────┐
   │  READY   │
   │  TO SCM  │
   └──────────┘
        │
        ▼
644 ─┐  ◇
     │ CMND │ ── N ──┐
        │ Y          │
624 ─┐  ▼            │
   ┌──────────┐      │
   │   WAIT   │──────┘
   │ COMMAND  │
   └──────────┘
```

FIG.8E

FIG. 8F

FIG.9

SCM
1 MSEC

W R

W R

CMD 1 . . . . JT 1,2 LOOP
CMD 2 . . . . JT 3,4 LOOP
CMD 5 . . . . JT 5,6 LOOP
CMD 7 . . . . JT 1,3,5 CHECK
CMD 8 . . . . JT 2,4,6 CHECK

EVEN 1 MSEC TICK – CMD 7
ODD 1 MSEC TICK – CMD 8

250 MICRO SEC

W R TORQUE COMMAND

W R

ITT & BACK EMF ARE
COMPUTED EVERY 2 MSEC

CURRENT SAMPLE

TICK 0
CMD #

TICK 1

TICK 2

TICK 3

| 7/8 | 1 | 3 | 5 | 68K | 7/8 | 1 | 3 | 5 | 7/8 | 1 | 3 | 5 | |
| 5 | 7/8 | 1 | 3 | TMS | 5 | 7/8 | 1 | 3 | 5 | 7/8 | 1 | 3 | |

0 269 372

FIG. 10-1

FIG.10-2

FIG.IIA

```
  ( RESET )    ( VTICK )    ( UNSCHEDULED )    ( 457  WATCHDOG     )
                             ( INTERRUPT  )    (    TIMER INTERRUPT )
 453│            452│              │                      │
  ┌─────┐      ┌───────┐    454 ┌───────┐            ┌───────┐
  │INTINI│      │ SERVO │       │C & UNEX│            │ ERROR │
  └─────┘      └───────┘       └───────┘            └───────┘
 450│              │
  ┌─────┐          │
  │ MAIN │◄─────────┘
  └─────┘
      │
  ( EXIT )
```

FIG.IIB

```
( INTINI )  453
   │
┌────────┐
│ INISRC │
└────────┘
   │
┌────────┐
│ INSRCOM│
└────────┘
   │
┌────────┐
│ INIFIX │
└────────┘
   │
┌────────┐
│ INCONF │
└────────┘
   │
┌────────┐
│ INTMS  │       FIG.IIC
└────────┘
   │
┌────────┐
│ INIAIB │
└────────┘
   │
┌────────┐
│ INROB  │
└────────┘
   │
┌────────┐
│ INJTMS │
└────────┘
   │
┌────────┐
│ INJONT │
└────────┘
   │
┌────────┐
│ INBUF  │
└────────┘
   │
┌────────┐
│ INIDLC │
└────────┘
   │
┌────────┐
│ CRTINI │
└────────┘
   │
┌────────┐
│ BB INIT│
└────────┘
```

```
 450
  ( MAIN )
       │
  456 ┌───────┐
  │   │RDMASC │
  └───┤       │
      └───────┘
```

FIG.IID

FIG.11E

FIG.IIF

FIG.11G

FIG.11H

FIG.12-1

FIG.12-2

FIG.13

FIG.17

FIG.14

FIG.15

FIG.16A

FIG.16B